# EUROPEAN PATENT APPLICATION

(11) **EP 4 614 032 A1**
(43) Date of publication of application: **10.09.2025**
(21) Application number: 23884674.5
(22) Date of filing: 24.10.2023
(51) Int. Cl.: F16K 1/02

(54) **EXPANSION VALVE**

(30) Priority: 31.10.2022 CN 202211344702
(71) Applicant: BYD Company Limited, Shenzhen, Guangdong 518118 (CN)
(72) Inventor: TANG, Jianguo, Shenzhen, Guangdong 518118 (CN); JIN, Qibin, Shenzhen, Guangdong 518118 (CN); LU, Yinbo, Shenzhen, Guangdong 518118 (CN)
(74) Representative: Mathys & Squire
(86) International application number: PCT/CN2023/126285
(87) International publication number: WO 2024/093742

(57) **Abstract**

An expansion valve (100), comprising a housing (10), a valve core (20), a valve needle assembly (30), a rotary rod (40), and a driving member (50), wherein a valve cavity (121) is defined inside the housing (10), a through hole (211) is formed in the valve core (20), and the valve needle assembly (30) is movably arranged in the valve cavity (121); the driving member (50) can be used for driving the rotary rod (40) to rotate relative to the valve core (20), such that the rotary rod (40) moves in the axial direction of the rotary rod (40) so as to drive the valve needle assembly (30) to close or open an outlet; at least one positioning groove (13) is formed in one of the valve core (20) and the housing (10), and at least one positioning protrusion (221) is arranged on the other of the valve core (20) and the housing (10), the positioning protrusion (221) matches and being fixed to the positioning groove (13); and the expansion valve (100) can facilitate assembly of the valve core (20) and the housing (10).

## Description

### CROSS-REFERENCE TO RELATED DISCLOSURES

The present disclosure claims priority to Chinese Patent Disclosure No. 202211344702.2, titled "Expansion Valve", filed on October 31, 2022, which is incorporated herein by reference in its entirety.

### FIELD

The present disclosure relates to the field of expansion valve technologies, and in particular, to an expansion valve.

### BACKGROUND

The expansion valve is primarily applied in refrigeration systems. The rotation of the rotor is controlled by an electromagnetic coil, and through the cooperation between the rotary rod and the nut, the valve needle can move toward or away from the outlet, thereby opening or closing the outlet. This adjustment changes the flow area of the outlet, and further achieves the regulation of the refrigerant flow. In the prior art, the assembly process of the valve core and the valve body is overly complex, and the reliability and stability after assembly are relatively low, which also affects the assembly efficiency. Furthermore, the sealing performance at the connection between the valve core and the valve body is inadequate, which affects the normal operation of the expansion valve.

### SUMMARY

The present disclosure is intended to solve at least one of the technical problems existing in the prior art. To this end, the present disclosure provides an expansion valve. The expansion valve can facilitate the assembly of the valve core and the housing.

According to the expansion valve in the example of the present disclosure, the expansion valve includes a housing, valve core, a valve needle assembly, a rotary rod and a driving member, a valve cavity is defined inside the housing, and an inlet and an outlet are formed on the housing, both the inlet and the outlet are in communication with the valve cavity; the valve core is arranged in the valve cavity, a through hole is formed in the valve core and the inner wall of the through hole is arranged with a first thread; the valve needle assembly is movably arranged in the valve cavity; the rotary rod is arranged with a second thread matching the first thread, the rotary rod and the through hole are rotationally matched via the first thread and the second thread, and the valve needle assembly is arranged at one end of the rotary rod; and the driving member is used for driving the rotary rod to rotate relative to the valve core, to cause the rotary rod to move in the axial direction of the rotary rod so as to drive the valve needle assembly to close or open the outlet; at least one positioning groove is formed in one of the valve core and the housing, and at least one positioning protrusion is arranged on the other of the valve core and the housing, and the positioning protrusion matches and is fixed to the positioning groove.

According to the expansion valve of the present disclosure, the rotary rod and the valve core are threadedly matched so that the rotary rod can drive the valve needle to open and close the outlet along the axial direction of the rotary rod, thereby regulating the flow rate through the interior of the expansion valve. The valve core and the housing are assembled and fixed by positioning protrusions and positioning grooves. The structure for installing and limiting the valve core is simple, which can simplify the installation structure of the expansion valve, and can effectively increase the reliability of the assembly of the valve core and the housing, thereby improving the assembly efficiency of the valve core and the housing.

In some examples, the housing includes a shell and a valve body, an opening is arranged at one end of the shell in the axial direction of the shell; the valve body is arranged at the opening, a valve cavity is defined between the valve body and the shell, the inlet and the outlet are both arranged on the valve body, and the valve core is in guiding engagement with the valve body in a first direction.

In some examples, at least a portion of the valve core is located in the valve body, the positioning groove is arranged on the valve body, and the positioning protrusion is arranged on the valve core, and the positioning groove matches with the positioning protrusion to limit the movement of the valve core relative to the valve body along the first direction.

In some examples, the positioning groove is arranged with a first limiting portion, and the first limiting portion abuts against the positioning protrusion along the first direction, to ensure the first limiting portion limits the movement of the positioning protrusion along a second direction, and the second direction is opposite to the first direction.

In some examples, the positioning groove is arranged with a first notch at one end of the valve body in the second direction, and the first notch is designed for the positioning protrusion to pass through along the first direction.

In some examples, the positioning groove includes a first recess wall and a second recess wall, the first recess wall and the second recess wall are arranged opposite to each other, and the first limiting portion is fixedly connected to the first recess wall.

In some examples, the first limiting portion is integrally connected to the first recess wall.

In some examples, the valve body is arranged with a first relief groove adjacent to the positioning groove, and the first limiting portion is positioned between the positioning groove and the first relief groove.

In some examples, the first relief groove is arranged with a second notch at one end of the valve body along the second direction.

In some examples, the positioning groove is arranged with a second limiting portion, the second limiting portion is fixedly connected to the second recess wall, the second limiting portion abuts against the positioning protrusion along the first direction, and the valve body is arranged with a second relief groove adjacent to the positioning groove, and the second limiting portion is positioned between the positioning groove and the second relief groove.

In some examples, the first relief groove and the second relief groove are located on both sides of the positioning groove.

In some examples, the positioning groove is arranged with a third notch facing the valve core.

In some examples, the positioning groove is arranged with a third limiting portion and the third limiting portion abuts against the positioning protrusion along the second direction.

In some examples, the positioning groove features an abutment surface, and the positioning protrusion abuts against the abutment surface along the first direction.

In some examples, the positioning groove is arranged at an end of the valve body away from the first direction.

In some examples, the valve core is arranged with a relief plane corresponding to the positioning protrusion, and the relief plane is disposed at a side of the positioning protrusion away from the first direction.

In some examples, the number of the positioning grooves is two, the two positioning grooves are symmetrically arranged about the axis of the valve core, and the valve core is arranged with two positioning protrusions, and the two positioning protrusions are respectively fitted in the two positioning grooves.

In some examples, the valve core includes: a threaded portion and an extension portion, a through hole is formed in the threaded portion; one end of the extension portion away from the threaded portion extends into the valve body, and an outer wall surface of the extension portion is in guiding engagement with the valve body along the first direction.

In some examples, the valve body is arranged with a step portion, the step portion has a step surface that deviates from the first direction, and one end of the extension portion that is away from the threaded portion abuts against the step surface.

In some examples, a sliding space is formed in the extension portion, the sliding space is in communication with the through hole, the sliding space has an inner wall surface extending along the first direction, and the valve needle assembly is in guiding engagement with the inner wall surface of the sliding space.

In some examples, the valve needle assembly is arranged with a guide protrusion protruding toward the inner wall surface of the sliding space, and the valve needle assembly is in guiding engagement with the inner wall surface of the sliding space through the guide protrusion.

In some examples, the valve needle assembly is arranged with two guide protrusions, and the two guide protrusions are symmetrically arranged about the axis of the valve needle assembly.

In some examples, at least a portion of the valve body is located inside the shell, and at least a portion of the outer wall surface of the valve body is fixedly connected to the inner wall surface of the shell.

In some examples, the valve body includes: a first valve body and a second valve body, the valve cavity is defined among the second valve body, the first valve body and the shell, the second valve body is arranged at one end of the first valve body away from the shell, the outlet and the inlet are formed on the second valve body, and the outlet and the inlet are both in communication with the valve cavity.

In some examples, a fitting hole is formed in the first valve body and extends through along the axial direction of the rotary rod, and the valve core is arranged with a valve core connecting portion, and the valve core connecting portion extends into the fitting hole from the end of the first valve body away from the second valve body, and the valve core connecting portion is in guiding engagement with the fitting hole along the first direction.

In some examples, the fitting hole includes a first hole segment and a second hole segment distributed along the axial direction of the rotary rod, the first hole segment is connected to an end of the second hole segment away from the second valve body, the positioning groove is arranged on the first hole segment, the positioning protrusion is arranged on the valve core connecting portion, and the second hole segment is in guiding engagement with the valve core connecting portion.

In some examples, the valve needle assembly includes: a valve needle and an elastic component, the valve needle is arranged with a valve needle cavity, the elastic component is arranged in the valve needle cavity along the axial direction of the rotary rod, the two ends of the elastic component in the axial direction of the rotary rod are a first end and a second end, where the first end abuts against the valve needle, and the second end abuts against the rotary rod; wherein, the end of the rotary rod is arranged with an abutment portion, and the abutment portion has an arc surface, the abutment portion is located within the valve needle cavity and is movable along the axial direction of the rotary rod, and the arc surface abuts against the second end of the elastic component.

In some examples, the abutment portion is a ball head.

In some examples, a through-hole is formed in the valve needle and extends through along the axial direction of the rotary rod to the valve needle cavity, and the rotary rod includes a rod portion and the abutment portion, the radial dimension of the rod portion is smaller than the hole diameter of the through-hole, the rod portion passes through the through-hole, and the rod portion is fixedly connected to the abutment portion.

In some examples, the rod portion and the abutment portion are integrally formed.

In some examples, the through-hole includes: a first connection segment and a second connection segment, the second connection segment and the first connection segment are distributed along the axial direction of the rotary rod, the second connection segment is in communication with the valve needle cavity, the cross-sectional area of the second connection segment gradually increases in a direction toward the valve needle cavity, and the inner side wall of the second connection segment is designed for abutting against the abutment portion; the abutment portion is arranged with a fitting surface, and the fitting surface is designed for abutting against and being limited by the inner side wall of the second connection segment, and the first recess is formed on the fitting surface.

In some examples, at least a portion of the inner wall of the second connection segment is a plane, and the plane is designed for abutting against the abutment portion.

In some examples, the elastic component includes: an elastic element and a support component, the support component is arranged between the abutment portion and the elastic element.

In some examples, the support component includes: a stop portion and a guide portion, a side surface of the stop portion facing the rotary rod abuts against the abutment portion, the guide portion is connected to a side of the stop portion away from the rotary rod, the cross-sectional area of the guide portion is smaller than the cross-sectional area of the stop portion, the elastic element is at least partially sleeved on the guide portion, and the elastic element abuts between a side surface of the stop portion that is away from the rotary rod and an inner wall of the valve needle cavity on the side away from the rotary rod.

In some examples, the elastic component includes an elastic element, and the abutment portion is in direct contact with the elastic element.

In some examples, the second end of the elastic element has a bent segment, and the bent segment extends in the direction toward the central axis of the elastic element and the bent segment abuts against the abutment portion.

In some examples, the elastic element is coaxially arranged with the rotary rod, and the free end of the bent segment is located at the central axis of the elastic element.

In some examples, the surface of one side of the bent segment in contact with the abutment portion is flat.

In some examples, an air exchange channel is defined between the inner wall of the through-hole and the rotary rod, one end of the air exchange channel is in communication with the valve cavity, and the other end of the air exchange channel is in communication with the valve needle cavity.

In some examples, a first recess is formed at a position of the rotary rod opposite to the inner wall of the through-hole, and the inner wall of the through-hole and the first recess jointly define the air exchange channel.

In some examples, along the axial direction of the rotary rod, the length of the first recess is greater than the length of the through-hole.

In some examples, a second recess is formed on the inner wall of the through-hole, and the second recess and the rotary rod jointly define the air exchange channel.

In some examples, there are a plurality of air exchange channels, and the plurality of air exchange channels are arranged at intervals along the circumference of the rotary rod.

In some examples, the valve needle assembly includes: a valve needle, a first magnetic component and a second magnetic component, the valve needle is arranged with a valve needle cavity, wherein the second magnetic component and the first magnetic component are arranged in the valve needle cavity along the axial direction of the rotary rod, the first magnetic component abuts against the valve needle on a side away from the rotary rod, the second magnetic component is movably arranged between the rotary rod and the first magnetic component, the second magnetic component is in guiding engagement with the valve needle along the axial direction of the rotary rod, and the magnetism polarities of the sides of the second magnetic component and the first magnetic component facing each other are opposite, wherein, the one end of the rotary rod is arranged with an abutment portion, and the abutment portion is movably disposed in the valve needle cavity and abuts against the second magnetic component.

In some examples, the valve needle is arranged with a through-hole in communication with the valve needle cavity, the rotary rod passes through the through-hole, the abutment portion abuts against the second magnetic component, and the hole diameter of the through-hole is smaller than the maximum dimension of the second magnetic component in the radial direction of the through-hole.

In some examples, the abutment portion is fixedly connected to the second magnetic component.

In some examples, a fitting groove is formed on one side of the second magnetic component adjacent to the rotary rod, and the other end of the rotary rod is matched in the fitting groove.

In some examples, an anti-rotation limiting structure is arranged on the valve core, a guide groove is formed on the outer circumferential surface of the valve core and extends along an axial spiral direction of the valve core, an anti-rotation component is arranged in the guide groove, the anti-rotation component is in guiding engagement with the guide groove, the height of each turn of the anti-rotation component in the axial direction of the valve core is smaller than the width of each turn of the anti-rotation component in the radial direction of the valve core, and the height of each turn of the anti-rotation component in the axial direction of the valve core is smaller than the height of the guide groove in the axial direction; when the driving member drives the rotary rod to rotate, the driving member drives the anti-rotation member to move within the guide groove, and when the anti-rotation member abuts against the anti-rotation limiting structure, the driving member stops rotating.

In some examples, the width of each turn of the anti-rotation component in the radial direction of the valve core is L1, and the height of each turn of the anti-rotation component in the axial direction of the valve core is L2, wherein L1 and L2 satisfy: 2≤L1/L2≤3.

In some examples, the second valve body is arranged with a connecting portion, and the connecting portion extends into the fitting hole from one end of the first valve body away from the valve core, and the connecting portion is fixedly connected to the first valve body.

In some examples, the housing includes a valve seat. The valve seat is arranged corresponding to the outlet, and the valve seat is arranged with a valve seat outlet communicating with the outlet. When the valve needle assembly is in the closed position, it blocks the valve seat outlet to cut off the communication between the inlet and the outlet. When the valve needle assembly is in the open position, it is separated from the valve seat outlet, allowing the communication between the inlet and the outlet.

In some examples, the valve seat outlet includes a first outlet segment and a second outlet segment that are in communication with each other, the first outlet segment is in communication with the interior of the valve cavity, the second outlet segment connects between the first outlet segment and the outlet, the cross-sectional area of the second outlet segment and the cross-sectional area of the outlet gradually increase along the direction away from the outlet (123).

In some examples, the cross-sectional area of the first outlet segment gradually increases along the direction away from the outlet.

In some examples, the first outlet segment is formed as a first rotational surface, the second outlet segment is formed as a second rotational surface, the outlet is formed as a third rotational surface, the curvature of the third rotational surface is identical to that of the second rotational surface, and the third rotational surface is connected to the second rotational surface to form a rotational surface.

The additional aspects and advantages of the present disclosure will be partly described below, and will in part become evident from the following description, or may be understood through the practice of the present disclosure.

### BRIEF DESCRIPTION OF THE DRAWINGS

The above and/or additional aspects and advantages of the present disclosure will become apparent and readily understood from the description of the examples in conjunction with the following drawings, where:
FIG. 1 is a schematic diagram of an expansion valve according to the first example of the present disclosure;
FIG. 2 is a three-dimensional exploded schematic diagram of the expansion valve according to the first example of the present disclosure;
FIG. 3 is a schematic diagram of the valve body according to an example of the present disclosure;
FIG. 4 is a schematic diagram of the valve core according to an example of the present disclosure;
FIG. 5 is a schematic diagram of the valve needle assembly and the rotary rod according to an example of the present disclosure;
FIG. 6 is a three-dimensional exploded schematic diagram of the valve needle assembly and the rotary rod according to an example of the present disclosure;
FIG. 7 is a schematic diagram of the rotary rod according to an example of the present disclosure;
FIG. 8 is a schematic diagram of the elastic element according to an example of the present disclosure;
FIG. 9 is a schematic diagram of the expansion valve according to an example of the present disclosure;
FIG. 10 is a schematic diagram of the rotary rod according to an example of the present disclosure;
FIG. 11 is a schematic diagram of the rotary rod (with the second recess segment) according to an example of the present disclosure;
FIG. 12 is a schematic diagram of the valve needle cover according to an example of the present disclosure;
FIG. 13 is a schematic diagram of the valve needle body according to an example of the present disclosure;
FIG. 14 is a schematic diagram of the anti-rotation component according to an example of the present disclosure;
FIG. 15 is a schematic diagram of the driving member according to an example of the present disclosure;
FIG. 16 is a schematic diagram of an expansion valve according to the second example of the present disclosure;
FIG. 17 is a three-dimensional exploded schematic diagram of the expansion valve according to the second example of the present disclosure;
FIG. 18 is a schematic diagram of the second valve body according to an example of the present disclosure;
FIG. 19 is a schematic diagram of the valve seat according to an example of the present disclosure;

Reference signs:
100 expansion valve;
10 housing; 11 shell; 111 opening; 12 valve body; 121 valve cavity; 122 inlet; 123 outlet; 124 first relief groove; 125 second relief groove; 126 step portion; 1261 first valve body; 12610 fitting hole; 1262 second valve body; 1263 first hole segment; 1264 second hole segment; 1265 third hole segment; 1266 connecting portion; 1268 valve seat; 1269 first outlet segment; 1270 second outlet segment; 1260 step surface; 13 positioning groove; 131 first notch; 132 first recess wall; 133 second recess wall; 134 abutment surface; 1267 valve seat outlet;
20 valve core; 21 threaded portion; 211 through hole; 2111 first thread; 22 extension portion; 221 positioning protrusion; 222 sliding space; 2222 inner wall surface; 23 relief plane; 24 guide groove; 25 anti-rotation component; 251 anti-rotation portion; 26 flat portion; 201 valve core connecting portion;
30 valve needle assembly; 31 guide protrusion; 32 valve needle; 321 valve needle cavity; 322 valve needle body; 323 valve needle cover; 3231 through-hole; 32311 second recess; 3232 first connection segment; 3233 second connection segment; 33 elastic component; 331 elastic element; 3311 bent segment; 332 support component; 3321 stop portion; 3322 guide portion; 341 first magnetic component; 342 second magnetic component; 3421 fitting groove;
40 rotary rod; 41 second thread; 42 abutment portion; 421 fitting surface; 422 arc surface; 43 first recess; 431 first recess segment; 432 second recess segment; 44 rod portion;
50 driving member; 51 rib; 53 rotor assembly;
60 air exchange channel;
710 anti-rotation limiting structure; 71 first limiting protrusion; 72 second limiting protrusion;

### DETAILED DESCRIPTION

The examples of the present disclosure are described below in detail. The examples described below with reference to the accompanying drawings are exemplary.

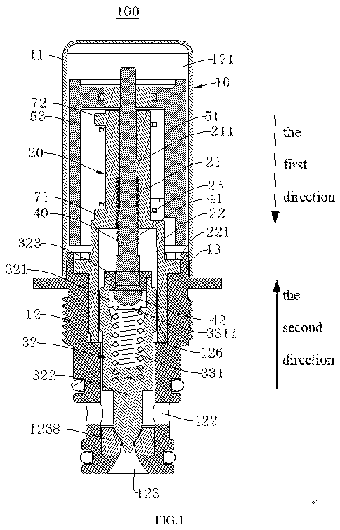

The expansion valve 100 according to an example of the present disclosure is described below with reference to FIG. 1 to FIG. 17. The expansion valve 100 comprises: a housing 10, a valve core 20, a valve needle assembly 30, a rotary rod 40 and a driving member 50.

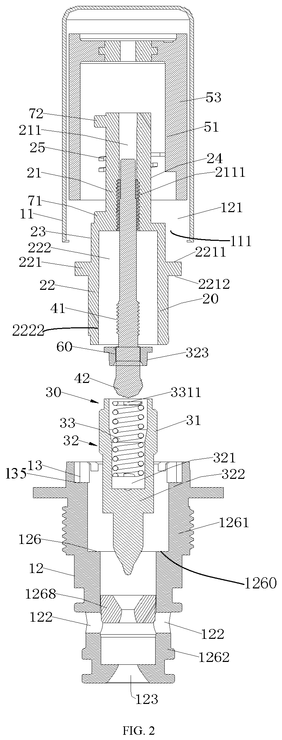

Specifically, as shown in FIG. 1 and FIG. 2, a valve cavity 121 is defined inside the housing 10, and an inlet 122 and an outlet 123 are formed on the housing 10, both the inlet 122 and the outlet 123 are in communication with the valve cavity 121; the valve core 20 is arranged in the valve cavity 121, a through hole 211 is formed in the valve core 20, and the inner wall of the through hole 211 is arranged with a first thread 2111; the valve needle assembly 30 is movably arranged in the valve cavity 121; the rotary rod 40 is arranged with a second thread 41 matching the first thread 2111, the rotary rod 40 and the through hole 211 are rotationally matched via the first thread 2111 and the second thread 41, and the valve needle assembly 30 is arranged at one end of the rotary rod 40. The valve needle assembly 30 is arranged in the valve cavity 121. One end of the rotary rod 40 is connected to the valve needle assembly 30, and the other end of the rotary rod 40 is threadedly matched with the valve core 20. The rotary rod 40 can drive the valve needle assembly 30 to move along the axial direction of the rotary rod 40 to realize the opening or closing of the outlet 123 by the valve needle assembly 30.

For example, the expansion valve 100 comprises a driving member 50, the driving member 50 is used for driving the rotary rod 40 to rotate relative to the valve core 20, such that the rotary rod 40 moves in the axial direction of the rotary rod 40 so as to drive the valve needle assembly 30 to close or open the outlet 123; at least one positioning groove 13 is formed in one of the valve core 20 and the housing 10, and at least one positioning protrusion 221 is arranged on the other of the valve core 20 and the housing 10, and the positioning protrusion 221 matches and is fixed to the positioning groove 13. Here, the positioning groove 13 is arranged on the housing 10, and the positioning protrusion 221 is arranged on the valve core 20 as an example for description, and the valve core 20 and the housing 10 are installed through the positioning groove 13 and the positioning protrusion 221.

According to the expansion valve 100 of the present disclosure, the rotary rod 40 and the valve core 20 are threadedly matched so that the rotary rod 40 can drive the valve needle assembly 30 to open or close the outlet 123 along the axial direction of the rotary rod 40, thereby regulating the flow rate through the interior of the expansion valve 100. The valve core 20 and the housing 10 are assembled and fixed by positioning protrusions 221 and positioning grooves 13. The structure for installing and limiting the valve core 20 is simple, which can simplify the installation structure of the expansion valve 100, and can effectively increase the reliability of the assembly of the valve core 20 and the housing 10, thereby improving the assembly efficiency of the valve core 20 and the housing 10.

Furthermore, as shown in FIG.2, the housing 10 comprises a shell 11 and a valve body 12. An opening 111 is arranged at one end of the shell 11 in the axial direction of the shell 11. The valve body 12 is arranged at the opening 111. A valve cavity 121 is defined between the valve body 12 and the shell 11. An inlet 122 and an outlet 123 are both arranged at one end of the valve body 12 away from the shell 11. The valve core 20 is in guiding engagement with the valve body 12 along a first direction, which is along the axial direction of the rotary rod 40 toward the outlet 123. Specifically, when the valve core 20 is assembled with the valve body 12, the valve core 20 and the valve body 12 can move relative to each other along the axial direction of the rotary rod 40. For example, along the axial direction of the rotary rod 40, the valve core 20 can be assembled and disassembled with the valve body 12, and the valve body 12 limits the freedom of the valve core 20 along the radial direction perpendicular to the axial direction of the rotary rod 40. After the valve core 20 and the valve body 12 are guided and matched and installed in place along the axial direction of the rotary rod 40, the valve core 20 and the valve body 12 are fixedly connected again. The guide match defines the precise positioning matched between the valve core 20 and the valve body 12, so that the valve core 20 can match with the valve body 12 in the axial direction of the rotary rod 40, thereby increasing the reliability of the assembly of the valve core 20 and the valve body 12 and improving the assembly efficiency.

At least a portion of the valve core 20 is located in the valve body 12, the positioning groove 13 is arranged on the valve body 12, the positioning protrusion 221 is arranged on the valve core 20, and the positioning groove 13 matches with the positioning protrusion 221 to limit the movement of the valve core 20 relative to the valve body 12 along the first direction. That is, the valve core 20 is arranged in the valve cavity 121, and the end of the valve core 20 adjacent to the outlet 123 cooperates with the valve body 12 through the positioning protrusion 221 and the positioning groove 13 to achieve a fixed connection. For example, the valve core 20 can be close to the end of the valve body 12 adjacent to the shell 11 along the axial direction of the rotary rod 40, so that the positioning protrusion 221 is opposite to and matches with the positioning groove 13, so as to limit the movement of the valve core 20 relative to the valve body 12 in the direction away from the outlet 123, thereby increasing the reliability of the installation of the valve core 20 and the valve body 12. Therefore, a positioning protrusion 221 is arranged on the valve core 20 and a positioning groove 13 is arranged on the valve body 12, and the valve core 20 is in guiding engagement with the valve body 12 along the first direction. The valve body 12 provides guidance for the installation of the valve core 20, so that the valve core 20 and the valve body 12 can be accurately installed and fixed, thereby improving the installation efficiency.

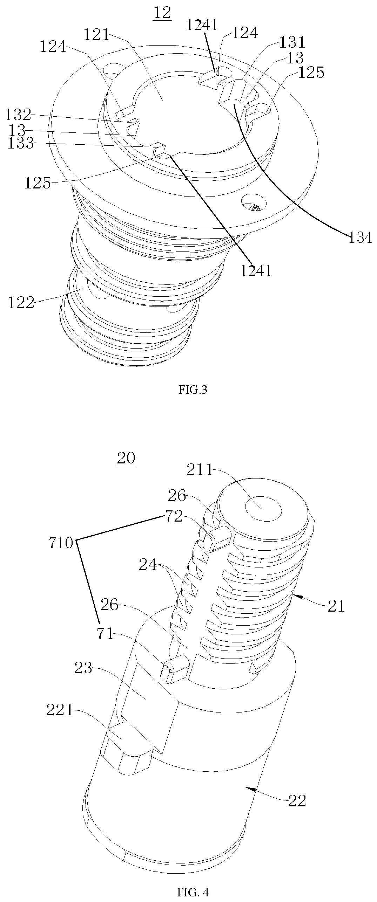

In some examples, as shown in FIG. 2 and FIG. 3, the positioning groove 13 is arranged with a first limiting portion 135, and the first limiting portion 135 abuts against the positioning protrusion 221 along the first direction, to ensure the first limiting portion 135 can limit the movement of the positioning protrusion 221 along a second direction, and the second direction is opposite to the first direction. The first direction refers to the direction along the axial direction of the rotary rod 40 in which the valve core 20 moves towards the valve body 12 for assembly, while the second direction is opposite, i.e., the direction for the valve core 20 to move away from the valve body 12 for separation. The positioning protrusion 221 abuts against the first limiting portion 135, and after the first limiting portion 135 abutting against, the positioning protrusion 221 can be limited to move along the axial direction of the rotary rod 40, so as to prevent the positioning protrusion 221 from disengaging from the positioning groove 13 and enhance the fixation of the positioning protrusion 221 by the positioning groove 13. Therefore, the positioning groove 13 is arranged with the first limiting portion 135 and the first limiting portion 135 abuts against the positioning protrusion 221, which can facilitate forming a limit for the positioning protrusion 221, and increase the reliability of the installation of the valve core 20 and the valve body 12, and facilitate improving the installation efficiency of the valve core 20.

In some examples, as shown in FIG. 3, at one end of the valve body 12 in the second direction, the positioning groove 13 is arranged with a first notch 131, and the first notch 131 is designed for the positioning protrusion 221 to pass through along the first direction, so that the positioning protrusion 221 can be located in the positioning groove 13. The first notch 131 is open in a direction away from the outlet 123, so that the positioning protrusion 221 on the valve core 20 can cooperate with the positioning groove 13 along the first direction, which is convenient for the connection between the valve core 20 and the valve body 12 and increases the convenience of the cooperation between the positioning protrusion 221 and the positioning groove 13.

In some examples, as shown in FIG.3, the positioning groove 13 comprises a first recess wall 132 and a second recess wall 133 that extend along the assembly direction, the first recess wall 132 and the second recess wall 133 are arranged oppositely, and the first limiting portion 135 is fixedly connected to the first recess wall 132. The positioning groove 13 comprises the first recess wall 132 and the second recess wall 133 that are circumferentially spaced apart along the valve body 12. When the positioning protrusion 221 cooperates with the positioning groove 13, an external device applies force to a side of the first recess wall 132 away from the second recess wall 133, causing the first recess wall 132 to bend towards the second recess wall 133. The bent portion of the first recess wall 132 is configured as the first limiting portion 135, and the first limiting portion 135 can abut against the positioning protrusion 221.

In some examples, the first limiting portion 135 is integrally connected to the first recess wall 132, and the first limiting portion 135 is formed by a portion of the first recess wall 132. The first limiting portion 135 is integrally connected to the first recess wall 132, which can improve the structural strength of the first limiting portion 135, and facilitate the formation of the first limiting portion 135, and contribute to the limiting function of the first limiting portion 135 on the positioning protrusion 221.

In some examples, as shown in FIG.3 , the valve body 12 is arranged with a first relief groove 124 adjacent to the positioning groove 13, and the first limiting portion 135 is positioned between the positioning groove 13 and the first relief groove 124, and extends toward the center of the first relief groove 124. Therefore, providing the first relief groove 124 facilitates external device applies force to the first recess wall 132, enabling a portion of the first recess wall 132 to form the first limiting portion 135 to limit the positioning protrusion 221. This prevents the positioning protrusion 221 from being separated from the positioning groove 13 along the axial direction of the rotary rod 40, and increasing the reliability of the cooperation between the positioning groove 13 and the positioning protrusion 221.

In some examples, the first relief groove 124 is arranged with a second notch 1241 at one end of the valve body 12 along the second direction. The second notch 1241 is arranged at one end of the first relief groove 124 away from the outlet 123, allowing external device to extend from the second notch 1241 into the first relief groove 124 and abut against the first recess wall 132. The second relief groove 125 is arranged with a second notch 1241 on the same side as the first relief groove 124. Thus, the second notch 1241 facilitates the plastic deformation of the first recess wall 132 and the second recess wall 133 to form an abutment against the positioning protrusion 221, effectively avoiding the wear or damage to the side of the first relief groove 124 away from the positioning groove 13 during, for example, the knife retracting process. This ensures the integrity of the valve body 12 while smoothly forming the first limiting portion 135.

In addition, the positioning groove 13 may be arranged with a second limiting portion, the second limiting portion is fixedly connected to the second recess wall 133, and the second limiting portion abuts against the positioning protrusion 221 along the first direction. The valve body 12 is arranged with a second relief groove 125 adjacent to the positioning groove 13, and the second limiting portion is positioned between the positioning groove 13 and the second relief groove 125. And the first relief groove 124 and the second relief groove 125 are located on both sides of the positioning groove 13. The external device applies force to the side of the second recess wall 133 away from the first recess wall 132, causing the second recess wall 133 to bend towards the first recess wall 132, and the bent portion of the second recess wall 133 is configured as the second limiting portion. The first limiting portion 135 and the second limiting portion can both abut against the positioning protrusion 221. Of course, the first recess wall 132 and the second recess wall 133 can be bent towards each other simultaneously to form an abutment against the positioning protrusion 221.

Thus, the arrangement of the first recess wall 132 and the second recess wall 133 can facilitate the formation of the first limiting portion 135 and the second limiting portion to form an abutment against the positioning protrusion 221, and form a limit for the positioning protrusion 221, allowing the positioning protrusion 221 to be stably installed in the positioning groove 13. In addition, the first relief groove 124 and the second relief groove 125 are arranged on both sides of the positioning groove 13, so that the first limiting portion 135 and the second limiting portion can be formed at the same time, which increases the reliability of the installation of the valve core 20 and the valve body 12, and can effectively avoid misalignment between the valve core 20 and the valve body 12 caused by the bending of the first recess wall 132 toward the second recess wall 133 or the second recess wall 133 toward the first recess wall 132, and affecting the installation accuracy of the valve core 20 and the valve body 12. This can increase the installation accuracy of the valve core 20 and the valve body 12. Moreover, it allows external device to extend into the first relief groove 124 and the second relief groove 125 to press the first recess wall 132 and the second recess wall 133, making the installation of the positioning protrusion 221 and the positioning groove 13 tighter. At the same time, such a design facilitates the external device to exit the valve body 12 after the first limiting portion 135 and the second limiting portion are formed, avoiding the valve body 12 from interfering with the external device.

In some examples, the positioning groove 13 is arranged with a third notch (not shown) facing the valve core 20, and the third notch is opposite to the first notch 131 in the axial direction of the rotary rod 40. Therefore, the arrangement of the third notch can facilitate the cooperation between the positioning groove 13 and the positioning protrusion 221, and reduce the precision requirement for the assembly of the positioning groove 13 and the positioning protrusion 221 in the first direction.

In some examples, the positioning groove 13 is arranged with a third limiting portion, and the third limiting portion abuts against the positioning protrusion 221 along the second direction. That is, the third limiting portion is formed on the side wall of the positioning groove 13 adjacent to the outlet 123, on the side away from the outlet 123. For example, the third limiting portion can be a portion where one end of the first recess wall 132 and the second recess wall 133 adjacent to the outlet 123 bends toward the positioning protrusion 221, and the bent portion of one end of the first recess wall 132 and the second recess wall 133 adjacent to the outlet 123 is configured as the third limiting portion. Thus, the positioning groove 13 is arranged with the third limiting portion, and the third limiting portion abuts against the positioning protrusion 221, so as to increase the limiting effect of the positioning groove 13 on the positioning protrusion 221 and improve the stability of the installation of the positioning protrusion 221 and the positioning groove 13.

According to some examples of the present disclosure, the positioning groove 13 features an abutment surface 134, and the positioning protrusion 221 abuts against the abutment surface 134 along the first direction. The abutment surface 134 is the side of the side wall of the positioning groove 13 that is adjacent to the outlet 123 and is on the side away from the outlet 123. When the positioning groove 13 and the positioning protrusion 221 are in contact and abutted, the abutment surface 134 can limit the movement of the positioning protrusion 221 in the axial direction of the rotary rod 40 toward the outlet 123. Therefore, the positioning groove 13 has the abutment surface 134, which can facilitate the cooperation between the positioning groove 13 and the positioning protrusion 221, realize the support and limit of the positioning protrusion 221, so that the positioning protrusion 221 can be easily matched with the positioning groove 13 along the first direction, thereby increasing the installation speed of the valve core 20 and the valve body 12.

In some examples, the positioning groove 13 is arranged at one end of the valve body 12 away from the first direction. Thus, the valve core 20 can be conveniently moved along the first direction toward the outlet 123 to be installed with the valve body 12, so that the assembly has a good viewing angle, the convenience of the assembly personnel is increased, and the efficiency of the assembly of the valve core 20 and the valve body 12 is improved.

In some examples, as shown in FIG. 4, the valve core 20 is arranged with a relief plane 23 corresponding to the positioning protrusion 221, and the relief plane 23 is disposed at a side of the positioning protrusion 221 in the second direction. On the extension portion 22, the relief plane 23 is arranged on the side of the positioning protrusion 221 away from the outlet 123, and there are multiple relief planes 23, and the multiple relief planes 23 are arranged at intervals in the circumferential direction of the valve body 12. After the valve core 20 is assembled with the valve body 12, the relief plane 23 can prevent the deformation of the first limiting portion 135 and the second limiting portion caused by external forces or external device when the valve core 20 is fixedly connected to the valve body 12, thereby improving the assembly accuracy of the expansion valve 100.

Further, as shown in FIG.3 and FIG.4, the number of the positioning grooves is two, and the two positioning grooves 13 are symmetrically arranged about the axis of the valve core 20. The valve core 20 is arranged with two positioning protrusions 221, and the two positioning protrusions 221 are respectively matched in the two positioning grooves 13. Therefore, two positioning grooves 13 are arranged on the valve body 12 and two positioning protrusions 221 are arranged on the valve core 20 and the two positioning grooves 13 correspond to the two positioning protrusions 221 one by one, so that the valve core 20 and the valve body 12 achieve good reliability and stability.

In some examples, as shown in FIG. 1, the valve core 20 comprises a threaded portion 21 and an extension portion 22, a through hole 211 is formed in the threaded portion 21; the end of the extension portion 22 away from the threaded portion 21 extends into the valve body 12, and the outer wall surface of the extension portion 22 is in guiding engagement with the valve body 12 along the first direction. That is, the outer wall surface of the end of the extension portion 22 away from the threaded portion 21 is in guiding engagement with the inner wall surface of the valve body 12. This enables the valve core 20 to be installed with the valve body 12 along the first direction. The end of the rotary rod 40 away from the outlet 123 passes through the through hole 211 and the rotary rod 40 is rotationally matched with the through hole 211.The end of the rotary rod 40 adjacent to the outlet 123 is connected to the valve needle assembly 30, and the rotary rod 40 moves the valve needle assembly 30 along the through hole 211 in the axial direction of the valve body 12 to realize the opening or closing of the outlet 123. Therefore, the extension portion 22 is in guiding engagement with the valve body 12, the movement accuracy and guiding performance of the valve needle assembly 30 are enhanced, and the movement of the valve needle assembly 30 inside the valve body 12 is facilitated.

In some examples, as shown in FIG.2 and FIG.4, the valve body 12 is arranged with a step portion 126, and the step portion 126 has a step surface 1260 away from the first direction, and one end of the extension portion 22 away from the threaded portion 21 abuts against the step surface 1260. The extension portion 22 is arranged adjacent to the outlet 123 relative to the threaded portion 21, and the positioning protrusion 221 is arranged on the outer circumferential surface of the extension portion 22 and extends along the circumferential direction of the valve body 12. The portion of the extension portion 22 adjacent to the outlet 123 of the positioning protrusion 221 cooperates with the valve body 12, and the inner circumferential surface of the valve body 12 is formed with the step portion 126, and one end of the extension portion 22 away from the threaded portion 21 abuts against the step portion 126. The positioning protrusion 221 cooperates with the positioning groove 13 arranged at one end of the valve body 12 away from the outlet 123. One end of the rotary rod 40 is threadedly connected to the threaded portion 21, and the other end of the rotary rod 40 is connected to the valve needle assembly 30, and the rotary rod 40 drives the valve needle assembly 30 to move in the valve cavity 121. Therefore, a step portion 126 is arranged in the valve body 12, so that when the valve core 20 is assembled with the valve body 12, one end of the valve core 20 adjacent to the outlet 123 can abut against the step portion 126 to form a limit for the installation of the valve core 20, thereby realizing rapid installation of the valve core 20 and the valve body 12.

In some examples, referring to FIG. 1 and FIG. 2, a sliding space 222 is formed in the extension portion 22, the sliding space 222 is in communication with the through hole 211, the sliding space 222 has an inner wall surface 2222 extending along the first direction, and the valve needle assembly 30 is in guiding engagement with the inner wall surface 2222 of the sliding space 222. That is, during the assembly of the valve core 20 and the valve needle assembly 30, the inner wall surface of the valve core 20 is in guiding engagement with the outer wall surface of the valve needle assembly 30, and the valve needle assembly 30 is located in the sliding space 222 and moves in the sliding space 222 along the axial direction of the rotary rod 40. Therefore, the formation of the sliding space 222 facilitates the valve core 20 to simultaneously accurately position the valve body 12 and the valve needle assembly 30; and ensures the coaxially of the valve core 20, the valve needle assembly 30 and the valve body 12; and further ensures the coaxially of the valve needle assembly 30 and the outlet 123, so that the valve needle assembly 30 can smoothly abut against the outlet 123 when moving in the axial direction of the rotary rod 40, thereby achieving the blocking of the outlet 123.

Further, as shown in FIG. 2 , the valve needle assembly 30 is arranged with a guide protrusion 31 protruding toward the inner wall surface 2222 of the sliding space 222, and the valve needle assembly 30 is in guiding engagement with the inner wall surface 2222 of the sliding space 222 through the guide protrusion 31, and after the valve core 20 is matched with the valve body 12, the guide protrusion 31 is located on the side of the step portion 126 away from the outlet 123, and the guide protrusion 31 is spaced from the step portion 126. Therefore, the guide protrusion 31 is formed on the outer circumferential surface of the valve needle assembly 30 opposite to the sliding space 222, which can facilitate the abutment of the valve needle assembly 30 with the inner wall of the sliding space 222 and the movement of the valve needle assembly 30 in the sliding space 222, and increase the limit of the valve needle assembly 30 by the guide protrusion 31 in the radial direction of the valve body 12.

In some examples, as shown in FIG.2, the valve needle assembly 30 is arranged with two guide protrusions 31, and the two guide protrusions 31 are symmetrically arranged about the axis of the valve needle assembly 30. Therefore, the arrangement of the two guide protrusions 31 can facilitate the assembly of the valve needle assembly 30 and the valve body 12, and increase the stability of the assembly of the valve core 20 and the valve body 12.

In some examples, at least a portion of the valve body 12 is located inside the shell 11, and at least a portion of the outer wall surface of the valve body 12 is fixedly connected to the inner wall surface of the shell 11. For example, in the example shown in FIG. 1, the end of the valve body 12 away from the outlet 123 cooperates with the shell 11, and the shell 11 is sleeved on the end of the valve body 12 away from the outlet 123, the shell 11 and the valve body 12 are fixedly connected, e.g., by welding. Therefore, at least part of the valve body 12 is located in the shell 11, and the outer wall of the valve body 12 is abutted against the inner wall of the shell 11, which is convenient for the installation of the valve core 20 and the valve body 12, and the installation method is simple, which is conducive to improving the assembly efficiency of the expansion valve 100 and simplifying the installation process.

For example, when the valve core 20 is assembled with the valve body 12, the valve core 20 is cooperated with the valve body 12 along the first direction, and the end of the valve body 12 away from the outlet 123 after the cooperating is located in the shell 11, and the inner wall surface of the valve body 12 contacts the outer wall surface of the valve core 20 to form the positioning of the valve core 20, thereby increasing the guiding property when the valve core 20 is assembled with the valve body 12. Meanwhile, the positioning protrusion 221 is matched with the positioning groove 13 in the first direction, and the external device applies force to the first recess wall 132 and the second recess wall 133, so that the first recess wall 132 and the second recess wall 133 are bent toward the positioning protrusion 221 to form the first limiting portion 135 and the second limiting portion, and the first limiting portion 135 and the second limiting portion abut against the positioning protrusion 221 to limit the positioning protrusion 221 from being separated from the positioning groove 13 in the second direction, so that the positioning protrusion 221 can be quickly fixedly installed with the positioning groove 13, thereby improving the assembly speed and assembly accuracy of the valve core 20 and the valve body 12.

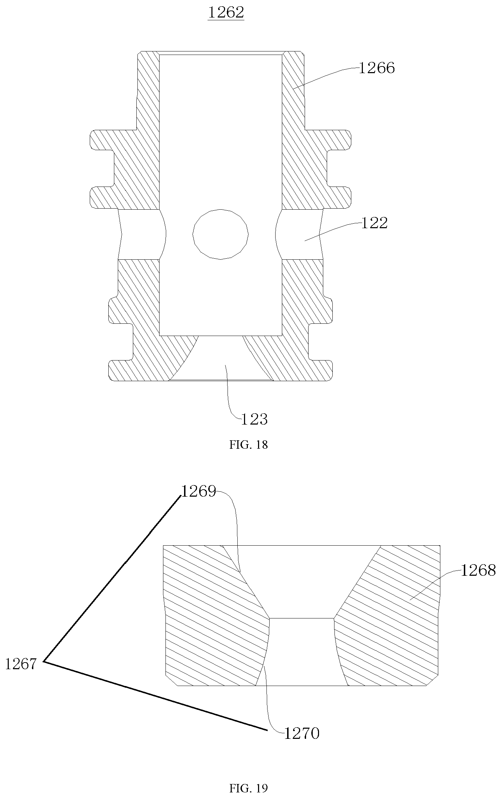

In some examples, as shown in FIG. 18 and FIG. 19, the valve body 12 comprises a first valve body 1261 and a second valve body 1262. A valve cavity 121 is defined among the first valve body 1261, the second valve body 1262 and the shell 11. The second valve body 1262 is arranged at one end of the first valve body 1261 away from the shell 11. An outlet 123 and an inlet 122 are formed on the second valve body 1262. Both the outlet 123 and the inlet 122 are in communication with the valve cavity 121. For example, the first valve body 1261 is located between the shell 11 and the second valve body 1262. The valve cavity 121 is designed to accommodate the valve core 20 and other components, so that the internal space of the shell 11 can be effectively utilized. The above-mentioned one end of the first valve body 1261 refers to the lower end of the first valve body 1261. The second valve body 1262 is connected to the lower end of the first valve body 1261. An outlet 123 and at least one inlet 122 are formed on the second valve body 1262. Both the outlet 123 and the inlet 122 are communicated with the valve cavity 121. Therefore, the refrigerant can flow into the second valve body 1262 through the inlet 122, and then flow out to the outside of the second valve body 1262 through the outlet 123, and the expansion valve 100 can control the flow rate of the refrigerant at the outlet 123. Therefore, by arranging the first valve body 1261 and the second valve body 1262 separately, the structural features of the first valve body 1261 and the second valve body 1262 can be simplified, and the processing difficulty can be reduced, and the processing accuracy can be improved. Thereby, it enhances the processing precision of the expansion valve 100 and extends the service life of the expansion valve 100.

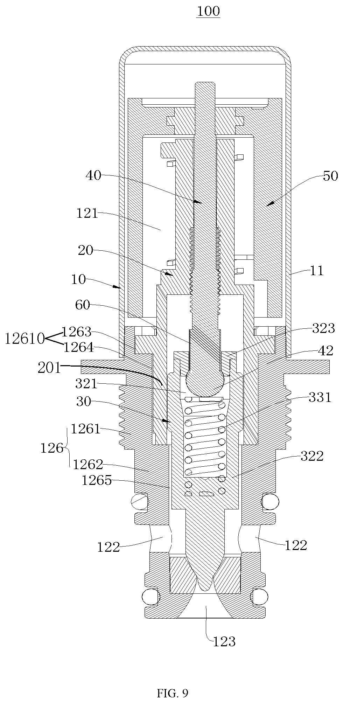

According to other examples of the present disclosure, as shown in FIG. 9, the first valve body 1261 and the second valve body 1262 may be formed integrally. This arrangement can reduce the assembly steps of the entire expansion valve 100, thereby improving the production efficiency of the expansion valve 100.

As shown in FIG. 9, FIG.18 and FIG.19, the valve needle assembly 30 is connected to the rotary rod 40. When the rotary rod 40 rotates, the rotary rod 40 drives the valve needle assembly 30 to move between the closed position and the open position. When the valve needle assembly 30 is in the closed position, the valve needle assembly 30 blocks the outlet 123 to separate the inlet 122 and the outlet 123; when the valve needle assembly 30 is in the open position, the valve needle assembly 30 is separated from the outlet 123 to connect the inlet 122 and the outlet 123. At this time, the working process of the expansion valve 100 is as follows: the rotary rod 40 rotates, and the rotary rod 40 can move downward in the valve cavity 121, and the rotary rod 40 drives the valve needle assembly 30 to move downward. When the valve needle assembly 30 moves to the closed position, the lower end of the valve needle assembly 30 blocks the outlet 123, and the refrigerant can flow into the valve body 12 through the inlet 122 and be stored in the second valve body 1262. At this time, the refrigerant in the second valve body 1262 will not flow out through the outlet 123. When the rotary rod 40 rotates in the opposite direction, the rotary rod 40 and the valve needle assembly 30 can move upward in the valve cavity 121 at the same time. When the valve needle assembly 30 moves to the open position, the valve needle assembly 30 is separated from the outlet 123, and the refrigerant stored in the second valve body 1262 can flow out through the outlet 123. Therefore, by moving the rotary rod 40 and the valve needle assembly 30 between the open position and the closed position, the valve needle assembly 30 can open or close the outlet 123, so that the flow rate of the refrigerant at the outlet 123 can be adjusted.

According to the expansion valve 100 of the example of the present disclosure, by arranging the first valve body 1261 and the second valve body 1262 separately, the processing difficulty of the first valve body 1261 and the second valve body 1262 can be reduced, the cost can be reduced and the processing accuracy of the first valve body 1261 and the second valve body 1262 can be improved.

In some examples, as shown in FIG. 9, FIG. 18 and FIG. 19, a fitting hole 12610 is formed in the first valve body 1261 and extends through along the axial direction of the rotary rod 40. The valve core 20 is arranged with a valve core connection portion 201. The valve core connection portion 201 extends into the fitting hole 12610 from one end of the first valve body 1261 away from the second valve body 1262, and the fitting hole 12610 is in guiding engagement with the valve core connection portion 201. For example, the above-mentioned one end of the first valve body 1261 refers to the upper end of the first valve body 1261. The valve core connection portion 201 can extend from the upper end of the first valve body 1261 into the fitting hole 12610, and the outer circumferential surface of the valve core connection portion 201 is in contact with the inner circumferential wall of the fitting hole 12610. Therefore, the first valve body 1261 and the second valve body 1262 can be connected as a whole, and by arranging the valve core connection portion 201, it is convenient to increase the firmness of the connection between the valve core 20 and the valve body 12, and improve the convenience of the connection.

In some examples, as shown in FIG.9, the fitting hole 12610 comprises a first hole segment 1263 and a second hole segment 1264 distributed along the axial direction of the rotary rod 40, the first hole segment 1263 is connected to an end of the second hole segment 1264 away from the second valve body 1262, the first hole segment 1263 is connected to the valve core connecting portion 201, and the second hole segment 1264 is in guiding engagement with the valve core connecting portion 201. It should be understood that the fitting hole 12610 comprises the first hole segment 1263 and the second hole segment 1264 merely as one example of the present disclosure.

In some examples, as shown in FIG. 9, the fitting hole 12610 further comprises a third hole segment 1265, the third hole segment 1265 is connected to the side of the second hole segment 1264 adjacent to the second valve body 1262, and the hole diameter of the fitting hole 12610 in the second hole segment 1264 is greater than the hole diameter of the fitting hole 12610 in the third hole segment 1265, so that the second hole segment 1264 and the third hole segment 1265 form a step surface, and the end of the valve core connection part 201 abuts against the step surface. In other words, the cross-sectional area of the second hole segment 1264 is greater than the cross-sectional area of the third hole segment 1265. When the valve core connection part 201 is connected to the first valve body 1261 as a whole, the lower end surface of the valve core connection part 201 abuts against the step surface. With such an arrangement, during the installation process of the valve core 20 and the first valve body 1261, the limiting function of the step surface can ensure that the installation is in place. Moreover, the step surface can support the valve core 20, which can effectively prevent the valve core 20 from moving downward along the fitting hole 12610, thereby enhancing the connection stability between the valve core 20 and the first valve body 1261, which is beneficial to the long-term use of the valve core 20, and further beneficial to the long-term use of the expansion valve 100.

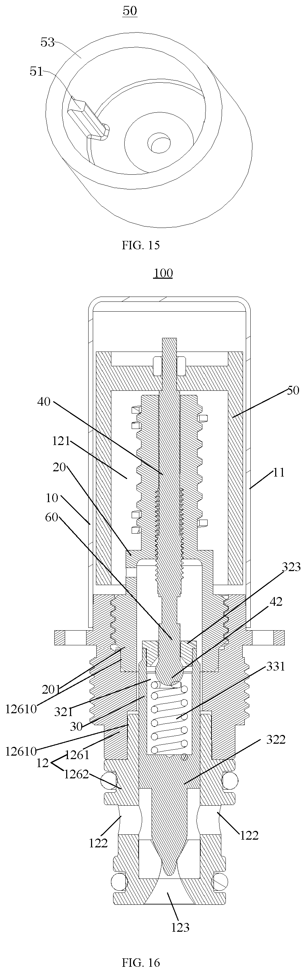

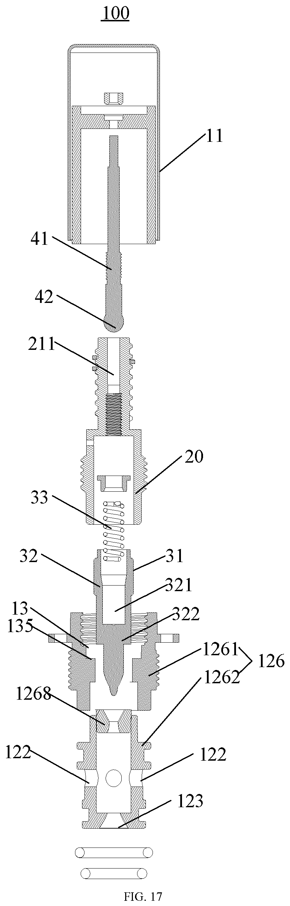

In some examples, as shown in FIG. 18 and FIG.19 and with reference to FIG.16 and FIG. 17, the second valve body 1262 has a connecting portion 1266, which extends from one end of the first valve body 1261 away from the valve core 20 into the fitting hole 12610, and the connecting portion 1266 is fixedly connected to the first valve body 1261. For example, the above-mentioned one end of the first valve body 1261 refers to the lower end of the first valve body 1261, and the connecting portion 1266 can extend from the lower end of the first valve body 1261 into the fitting hole 12610. The connecting portion 1266 is formed at the upper end of the second valve body 1262 and surrounds the valve needle 32, and the outer circumferential surface of the connecting portion 1266 is in contact with the inner circumferential wall of the fitting hole 12610. Therefore, the first valve body 1261 and the second valve body 1262 can be connected as a whole, and the contact area between the second valve body 1262 and the first valve body 1261 is increased by arranging the connecting portion 1266, thereby increasing the firmness of the connection between the first valve body 1261 and the second valve body 1262. Moreover, the connecting portion 1266 has a guiding effect on the valve needle 32, which is conducive to the valve needle 32 extending into the second valve body 1262, thereby facilitating the valve needle 32 to move up and down in the second valve body 1262. Meanwhile, the internal space of the first valve body 1261 can also be effectively utilized, so that the assembly of the first valve body 1261, the second valve body 1262, and the valve core 20 is more compact, thereby making the overall expansion valve 100 better-designed.

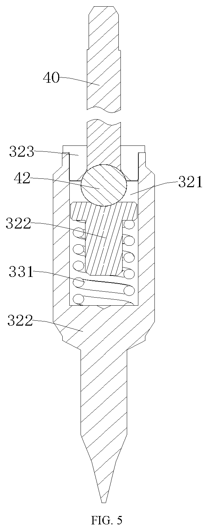

In some examples, as shown in FIG. 2 and FIG. 5, the valve needle assembly 30 comprises a valve needle 32 and an elastic component 33. The valve needle 32 is arranged with a valve needle cavity 321. The elastic component 33 is arranged in the valve needle cavity 321 along the axial direction of the rotary rod 40. The two ends of the elastic component 33 along the axial direction of the rotary rod 40 are respectively a first end and a second end. The first end abuts the valve needle 32, and the second end abuts the rotary rod 40. An abutment portion 42 is arranged at one end of the rotary rod 40 adjacent to the outlet 123. The abutment portion 42 has an arc surface 422 protruding toward one end of the outlet 123. The abutment portion 42 is located within the valve needle cavity 321 and is movable along the axial direction of the rotary rod 40. The arc surface 422 abuts against the second end of the elastic component 33. The rotary rod 40 and the valve core 20 are in rotational cooperation to drive the valve needle assembly 30 to open or close the outlet 123 along the axial direction of the rotary rod 40. The end of the rotary rod 40 adjacent to the outlet 123 is arranged with an abutment portion 42, the abutment portion 42 is located in the valve needle cavity 321 and connected to the valve needle assembly 30, and the end of the rotary rod 40 away from the outlet 123 cooperates with the through hole 211 to achieve threaded connection. For example, when the rotary rod 40 rotates forward relative to the valve core 20, the rotary rod 40 can drive the valve needle 32 connected thereto to move in a direction away from the outlet 123, thereby opening the outlet 123, and the fluid flows from the inlet 122 to the outlet 123; when the rotary rod 40 rotates backward relative to the valve core 20, the rotary rod 40 compresses the elastic component 33 through the abutment portion 42 to drive the valve needle 32 to move downward, thereby closing the outlet 123. The end of the abutment portion 42 adjacent to the outlet 123 is formed as an arc surface 422, and the abutment portion 42 contacts the end of the elastic component 33 away from the outlet 123 through the arc surface 422. The arc surface 422 and the elastic component 33 can achieve point contact or surface contact, which can ensure the stability of the contact between the rotary rod 40 and the elastic component 33. Meanwhile, during the rotation of the rotary rod 40, the axial force of the rotary rod 40 can be transmitted to the elastic component 33 and the valve needle 32 so that the elastic component 33 and the valve needle 32 move along the central axis direction of the rotary rod 40, and the valve needle 32 and the elastic component 33 will not rotate with the rotation of the rotary rod 40.

Therefore, by arranging the rotary rod 40 so that the rotary rod 40 can drive the elastic component 33 that abuts against the rotary rod 40 and the valve needle 32 to move along the central axis direction of the rotary rod 40, the elastic component 33 can reduce the influence of the axial force transmitted by the rotary rod 40 on the valve needle 32, and a pre-tightening force is formed between the valve needle 32 and the outlet 123 through the elastic component 33, so as to prevent the valve needle 32 and the outlet 123 from excessive contact and relative rotation, and reduce the wear caused by the rotation of the valve needle 32 on the outlet 123 and the wear of the outlet 123 on the valve needle 32, and increase the sealing of the expansion valve 100 and the service life of the expansion valve 100 when the valve needle 32 and the outlet 123 cooperate.

In some examples, the abutment portion 42 is a ball head. Therefore, the abutment portion 42 is a ball head, which can reduce the contact area between the abutment portion 42 and the elastic component 33, and can reduce the friction between the abutment portion 42 and the elastic component 33, and can reduce the influence of the circumferential force generated when the rotary rod 40 rotates on the elastic component 33, and further reduce the possibility of the valve needle 32 rotating relative to the outlet 123.

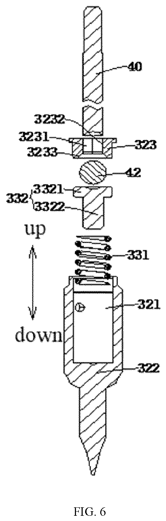

In some examples, as shown in FIG. 5 and FIG. 6, a through-hole 3231 is formed in the valve needle 32 and extends through along the axial direction of the rotary rod 40 to the valve needle cavity 321, and the rotary rod 40 comprises a rod portion 44 and an abutment portion 42. The radial dimension of the rod portion 44 is smaller than the hole diameter of the through-hole 3231, and the rod portion 44 passes through the through-hole 3231, and the rod portion 44 is fixedly connected to the abutment portion 42. For example, the rod portion 44 passes the through-hole 3231 and is welded to the abutment portion 42. The valve needle 32 comprises: a valve needle body 322 and a valve needle cover 323. The valve needle body 322 and the valve needle cover 323 enclose to form a valve needle cavity 321. A through-hole 3231 is arranged on the valve needle cover 323. One end of the rod 44 passes through the through-hole 3231 and extends into the valve needle cavity 321. The abutment portion 42 is connected to one end of the rod 44. The abutment portion 42 is located in the valve needle cavity 321. The maximum cross-sectional area of the abutment portion 42 is greater than the cross-sectional area of the through-hole 3231 to prevent the abutment portion 42 from disengaging from the valve needle cavity 321. Since the maximum cross-sectional area of the abutment portion 42 is greater than the maximum cross-sectional area of the through-hole 3231, when the rotary rod 40 moves in a direction away from the outlet 123, the abutment portion 42 can contact the valve needle cover 323 under the abut against the elastic component 33 and drive the valve needle 32 to move upward together, thereby opening the outlet 123. The rod portion 44 is fixedly connected to the abutment portion 42. For example, the rod portion 44 is welded to the abutment portion 42, or the rod portion 44 and the abutment portion 42 can be integrally connected through an integral molding process. The manner in which the rod portion 44 and the abutment portion 42 are fixedly connected is not specifically limited here. Therefore, the rotary rod 40 comprises the rod portion 44 and the abutment portion 42, which can facilitate the production and manufacture of the rotary rod 40, and reduce the manufacturing process difficulty and manufacturing cost, and the rod portion 44 is fixedly connected to the abutment portion 42, which can ensure the integrity and torsion resistance of the rotary rod 40 and improve the structural strength of the rotary rod 40.

Further, the expansion valve 100 comprises: a pad, which is arranged between the elastic component 33 and the inner wall of the valve needle cavity 321 on the side away from the rotary rod 40. For example, the pad is arranged between the elastic component 33 and the valve needle cavity 321, and the elastic component 33 abuts against the pad, which can increase the friction between the elastic component 33 and the pad, and between the pad and the valve needle 32, and the pad is not easy to rotate relative to the valve needle 32, so that when the contact area between the rotary rod 40 and the support component 332 is small and the friction generated is small, it can be further ensured that when the valve needle 32 closes the outlet 123, the circumferential force of the rotary rod 40 will not be transmitted to the support component 332. Therefore, a pad is arranged between the elastic component 33 and the inner wall of the valve needle cavity 321 away from the rotary rod 40, increasing the contact area between the pad and the inner wall of the valve needle cavity 321, thereby increasing the friction. Considering the small contact area and small friction force generated between the rotary rod 40 and the support component 332, it can be further ensured that when the rotary rod 40 rotates, the valve needle 32 will not rotate relative to the outlet 123, thereby avoiding the rotation of the valve needle 32 to cause wear on the outlet 123, and increasing the sealing performance when the outlet 123 is closed, and extending the service life of the expansion valve 100.

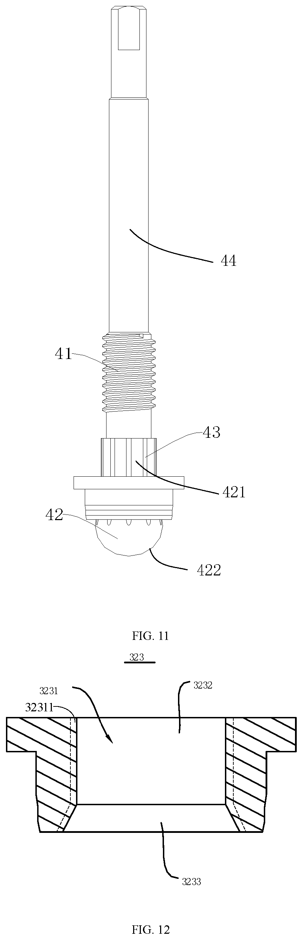

In some examples, as shown in FIG.12 , the through-hole 3231 comprises a first connection segment 3232 and a second connection segment 3233 distributed along the axial direction of the rotary rod 40, the second connection segment 3233 is in communication with the valve needle cavity 321, the cross-sectional area of the second connection segment 3233 gradually increases in the direction toward the valve needle cavity 321, and the inner side wall of the second connection segment 3233 is designed for abutting against the abutment portion 42. The rotary rod 40 is arranged with a fitting surface 421, the fitting surface 421 is arranged adjacent to the abutment portion 42 and is matched and limited with the inner side wall of the second connection segment 3233, and the first recess 43 is formed on the fitting surface 421. Therefore, when the abutment portion 42 is cooperated with the through-hole 3231, the friction generated when the abutment portion 42 rotates relative to the through-hole 3231 can be reduced, the wear between the abutment portion 42 and the valve needle 32 can be avoided, and the sealing inside the valve needle 32 can be improved. Meanwhile, the second connection segment 3233 can increase the limit of the abutment portion 42 to ensure the stability of the cooperation between the abutment portion 42 and the through-hole 3231, so as to facilitate the cooperation of the abutment portion 42 in the through-hole 3231.

In some examples, at least a portion of the inner side wall of the second connection segment 3233 is a plane, and the plane is designed for abutting against the abutment portion 42. For example, the inner side wall of the second connection segment 3233 comprises a plurality of sub-walls, and the plurality of sub-walls extend obliquely along the axial direction of the rotary rod 40 toward a direction away from the center of the expansion valve 100, and the plurality of sub-walls are arranged in sequence along the circumference of the rotary rod 40. Thus, at least a portion of the inner side wall of the second connection segment 3233 is a plane, and the abutment portion 42 is in point contact with the through-hole 3231, which can reduce the contact area between the abutment portion 42 and the through-hole 3231, and reduce the wear at the connection between the abutment portion 42 and the through-hole 3231 when the rotary rod 40 rotates.

In some examples, as shown in FIG.6, the elastic component 33 comprises an elastic element 331 and a support component 332, and the support component 332 is arranged between the abutment portion 42 and the elastic element 331. One end of the support component 332 away from the outlet 123 abuts against the rotary rod 40, and one end of the support component 332 adjacent to the outlet 123 abuts against the elastic element 331, and one end of the elastic element 331 away from the outlet 123 can be sleeved on the support component 332. Therefore, the arranging of the support component 332 can increase the stability of the abutment between the rotary rod 40 and the support component 332, and at the same time facilitate the installation of the elastic element 331, so that the elastic element 331 can be more stably installed in the valve needle cavity 321, so as to reduce the axial and circumferential forces transmitted to the valve needle 32 when the rotary rod 40 rotates. The support component 332 can cooperate with the inner wall of the valve needle cavity 321 and move along the inner wall of the valve needle cavity 321 to increase the stability of the valve needle 32 when moving up and down, so that the structure of the valve core 20 is more compact and more reliable.

In some examples, as shown in FIG.6, the support component 332 comprises a stop portion 3321 and a guide portion 3322, a side surface of the stop portion 3321 facing the rotary rod 40 abuts against the abutment portion 42, the guide portion 3322 is connected to the side of the stop portion 3321 away from the rotary rod 40, and the cross-sectional area of the guide portion 3322 is smaller than the cross-sectional area of the stop portion 3321. For example, in the example shown in FIG.6, the area of the plane formed by the guide portion 3322 along the axial direction perpendicular to the rotary rod 40 is smaller than the area of the plane formed by the stop portion 3321 along the axial direction perpendicular to the rotary rod 40. The elastic element 331 is at least partially sleeved on the guide portion 3322, and the elastic element 331 abuts against the side surface of the stop portion 3321 away from the rotary rod 40 and the inner wall of the valve needle cavity 321 away from the rotary rod 40. When the rotary rod 40 moves upward, the elastic element 331 drives the support component 332 to move upward, the downward extrusion force on the valve needle 32 is reduced, and the valve needle 32 moves upward to open the outlet 123; when the rotary rod 40 moves downward, the abutment portion 42 of the rotary rod 40 stops on the stop portion 3321 and gives the stop portion 3321 a downward axial force, thereby compressing the elastic element 331, thereby realizing that the valve needle 32 abutting against the elastic element 331 moves downward to close the outlet 123. The elastic element 331 is always in a compressed state during the travel of the valve needle 32 from the open position to the closed position, so that a pre-tightening force can be formed, which is convenient for limiting the support component 332 between the rotary rod 40 and the bottom wall of the valve needle 32, avoiding the support component 332 from generating an empty travel in the valve needle cavity 321, thereby avoiding affecting the accuracy of opening or closing the outlet 123, and improving the sealing between the outlet 123 and the valve needle 32 when closing the outlet 123. At the same time, the elastic element 331 can have a buffering effect to avoid hard contact between the rotary rod 40 and the support component 332, and between the valve needle 32 and the outlet 123, thereby improving the protection of the valve core 20 and extending the service life of the expansion valve 100.

In some examples, as shown in FIG.2, FIG.6 and FIG.9, the elastic component 33 comprises an elastic element 331, and the abutment portion 42 is in direct contact with the elastic element 331. That is, the end of the elastic element 331 away from the outlet 123 abuts against the abutment portion 42 of the rotary rod 40, and they can abut against each other through point contact or surface contact. Thus, the abutment portion 42 is in direct contact with the elastic element 331, which can reduce the possibility of the elastic element 331 rotating with the rotary rod 40 when the rotary rod 40 rotates, prevent the valve needle 32 from rotating with the rotary rod 40, and reduce the wear of the connection between the valve needle 32 and the outlet 123.

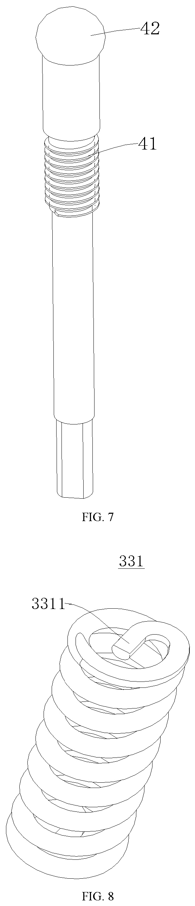

In some examples, as shown in FIG.8 to FIG.9, the second end of the elastic element 331 has a bent segment 3311, and the bent segment 3311 extends in the direction toward the central axis of the elastic element 331, and the bent segment 3311 abuts against the abutment portion 42. In this case, by making the abutment portion 42 of the rotary rod 40 abut against the bent segment 3311, when the valve needle 32 abuts and seals against the outlet 123, in order to further improve the sealing between the outlet 123 and the valve needle 32, the rotary rod 40 rotates frictionally relative to the elastic element 331, and the elastic element 331 reduces the transmission of the rotational movement of the rotary rod 40 to the valve needle 32. In other words, when the free end of the valve needle 32 is located in the outlet 123, the free end of the valve needle 32 will not rotate relative to the outlet 123. In this way, the wear caused by the relative rotation of the outlet 123 and the valve needle 32 can be reduced, so that the flow area of the outlet 123 can be effectively adjusted, and the service life of the expansion valve 100 can be extended. Therefore, by making the second end of the elastic element 331 have a bent segment 3311, and the bent segment 3311 extends in the direction toward the central axis of the elastic element 331, the abutment portion 42 abuts against the bent segment 3311, which can reduce the wear of the outlet 123 and the valve needle 32 caused by relative rotation, thereby effectively adjusting the flow area of the outlet 123 and extending the service life of the expansion valve 100.

In some examples, as shown in FIG.8, the surface of one side of the bent segment 3311 in contact with the abutment portion 42 is flat. For example, the bent segment 3311 can be ground into a flat by a grinding process on one side of the bent segment 3311 facing the abutment portion 42, so that the bent segment 3311 is easy to abut against the abutment portion 42 of the rotary rod 40, and the bent segment 3311 and the abutment portion 42 form a line contact, which reduces the contact area between the bent segment 3311 and the abutment portion 42, thereby reducing the friction between the bent segment 3311 and the abutment portion 42, which can further reduce the rotation resistance of the rotary rod 40, and prevent the valve needle 32 from rotating after abutting against the outlet 123.

In some examples, as shown in FIG. 4 and FIG. 6, the valve core 20 comprises a threaded portion 21 and an extension portion 22 connected to each other, the threaded portion 21 having a first connection segment 3232, the inner wall of which is formed with an internal thread, and the extension portion 22 having a second connection segment 3233, the second connection segment 3233 being in communication with the first connection segment 3232 and forming a through hole 211. The valve needle 32 is in guiding engagement with the inner wall surface of the second connection segment 3233, and the extension portion 22 is fixedly connected to the valve body 12. For example, the first connection segment 3232 penetrates the threaded portion 21, and an internal thread is formed on the inner wall of the first connection segment 3232 adjacent to the extension portion 22, the hole diameter of the first connection segment 3232 is smaller than the hole diameter of the second connection segment 3233, and the valve needle 32 moves in the second connection segment 3233, ensuring that the valve needle 32 can open or close the outlet 123.

In some examples, as shown in FIG. 9 to FIG.12, an air exchange channel 60 is defined between the inner wall of the through-hole 3231 and the rotary rod 40, one end of the air exchange channel 60 is in communication with the valve cavity 121, and the other end of the air exchange channel 60 is in communication with the valve needle cavity 321. When the valve needle 32 is in abutment with the outlet 123 for sealing, in order to further improve the sealing between the outlet 123 and the valve needle 32, the rotary rod 40 rotates frictionally relative to the elastic element 331. By defining the air exchange channel 60 between the inner wall of the through-hole 3231 and the rotary rod 40, the contact area between the rotary rod 40 and the inner wall surface of the through-hole 3231 of the valve needle 32 can be reduced, thereby reducing the rotational friction between the rotary rod 40 and the inner wall surface of the through-hole 3231, and further reducing the abnormal rotation noise. In addition, when the valve needle cavity 321 is in a vacuum state, the valve needle cavity 321 can be ventilated with the valve cavity 121 through the air exchange channel 60 and the through hole 211, so that the pressure in the valve needle cavity 321 can be effectively adjusted to ensure the smooth movement of the valve needle 32. Therefore, by defining the air exchange channel 60 between the inner wall of the through-hole 3231 and the rotary rod 40, and the two ends of the air exchange channel 60 are respectively connected to the valve needle cavity 321 and the valve cavity 121, compared with the traditional expansion valve 100, the rotational friction between the rotary rod 40 and the valve needle cover 323 can be reduced, so that the abnormal rotation noise can be reduced, and at the same time, the pressure in the valve needle cavity 321 can be effectively adjusted to ensure the smooth movement of the valve needle 32.

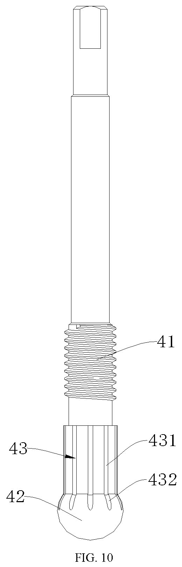

In conjunction with FIG.10, a first recess 43 is formed at a position of the rotary rod 40 opposite to the inner wall of the through-hole 3231, and the inner wall of the through-hole 3231 and the first recess 43 jointly define the air exchange channel 60. For example, in the examples of FIG.10 and FIG.11, the first recess 43 is disposed adjacent to the abutment portion 42, and the first recess 43 extends along the circumference of the rotary rod 40, and one side of the first recess 43 adjacent to the inner wall surface of the through-hole 3231 is open, so that the first recess 43 and the inner wall surface of the through-hole 3231 jointly define the air exchange channel 60.

In some examples, as shown in FIG. 6, FIG. 9 and FIG. 10, the length of the first recess 43 along the axial direction of the rotary rod 40 is greater than the length of the through-hole 3231. Referring to FIG. 10, the free end of the first recess segment 431 protrudes from one end of the valve needle cover 323, and the free end of the second recess segment 432 protrudes from the other end of the valve needle cover 323. The protruding parts of the first recess segment 431 and the second recess segment 432 can play a guiding role, so that the valve needle cavity 321 and the valve cavity 121 are more smoothly exchanged.

In some examples, a second recess 32311 is formed on the inner wall of the through-hole 3231, and the second recess 32311 and the rotary rod 40 jointly define the air exchange channel 60. The second recess 32311 is formed on the inclined surface, and the first recess 43 and the second recess 32311 can be opposite to each other to jointly define the air exchange channel 60. For example, the second recess 32311 can extend obliquely in a direction away from the center of the valve needle cover 323, and the side of the second recess 32311 adjacent to the abutment portion 42 is open, and the second recess 32311 is opposite to the first recess 43, so that the cross-sectional area of the side of the air exchange channel 60 adjacent to the elastic element 331 can be increased, and the ventilation volume in the air exchange channel 60 can be increased, so as to adjust the pressure in the valve needle cavity 321 more quickly.

In some examples, a first recess 43 is formed on the rotary rod 40 corresponding to the inner wall of the through-hole 3231, at least a portion of the inner wall surface of the through-hole 3231 is a first inclined surface, which slopes away from the center of the valve needle 32, and a second recess 32311 is formed on the first inclined surface, and the first recess 43 and the second recess 32311 jointly define the air exchange channel 60. For example, the second recess 32311 can extend obliquely in a direction away from the center of the valve needle cover 323, and the side of the second recess 32311 adjacent to the abutment portion 42 is open, and the second recess 32311 is opposite to the first recess 43, so that the cross-sectional area of the side of the air exchange channel 60 adjacent to the elastic element 331 can be increased, and the ventilation volume in the air exchange channel 60 can be increased, so as to adjust the pressure in the valve needle cavity 321 more quickly.

Alternatively, when the first recess 43 and the second recess 32311 are staggered with each other, the first recess 43 faces the inner wall of the through-hole 3231, and the second recess 32311 faces the outer circumferential surface of the rotary rod 40, thereby defining the air exchange channel 60. In this way, the number of air exchange channels 60 can be increased, so that the pressure in the valve needle cavity 321 can be quickly balanced.

In some examples, as shown in FIG. 9 and FIG. 10, there are multiple air exchange channels 60, and the multiple air exchange channels 60 are arranged at intervals along the circumference of the rotary rod 40. For example, there may be ten first recesses 43, and the ten first recesses 43 are evenly arranged at intervals along the circumference of the matching portion, and there are ten second recesses 32311, and the ten second recesses 32311 are evenly arranged at intervals along the circumference of the inner wall surface of the through-hole 3231 of the valve needle cover 323, so that the valve needle cover 323 and the rotary rod 40 jointly define ten air exchange channels 60, which can further reduce the rotational friction between the matching portion and the rotary rod 40, and at the same time, the pressure of the valve needle cavity 321 can be balanced as soon as possible.

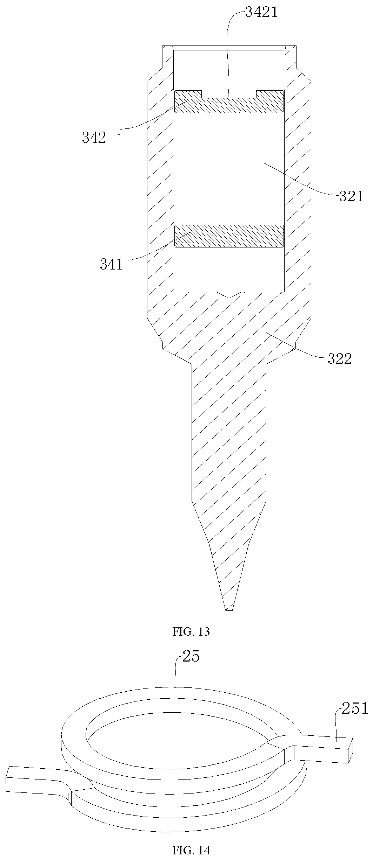

In some examples, with reference to FIG. 1 and FIG. 13, the valve needle assembly 30 comprises a valve needle 32, a first magnetic component 341 and a second magnetic component 342. The valve needle 32 is arranged with a valve needle cavity 321. The first magnetic component 341 and the second magnetic component 342 are arranged in the valve needle cavity 321 along the axial direction of the rotary rod 40. The first magnetic component 341 abuts against the valve needle 32 on the side away from the rotary rod 40. The second magnetic component 342 is movably arranged between the rotary rod 40 and the first magnetic component 341. The second magnetic component 342 is in guiding engagement with the valve needle 32 along the axial direction of the rotary rod 40, that is, the outer wall surface of the second magnetic component 342 cooperates with the inner wall surface of the valve needle cavity 321. The inner wall surface of the valve needle cavity 321 has a guiding effect on the second magnetic component 342, and the magnetic polarities of the sides of the second magnetic component 342 and the first magnetic component 341 facing each other are opposite. An abutment portion 42 is arranged at one end of the rotary rod 40 adjacent to the outlet 123. The abutment portion 42 can be movably arranged in the valve needle cavity 321 and abuts against the second magnetic component 342. The rotary rod 40 is in rotationally matched with the valve core 20 to drive the valve needle assembly 30 to open or close the outlet 123. The second magnetic component 342 is located at one end of the valve needle cavity 321 away from the outlet 123. The second magnetic component 342 can move up and down in the valve needle cavity 321 under the magnetic force of the first magnetic component 341. The end of the rotary rod 40 adj acent to the second magnetic component 342 has the abutment portion 42, and the end of the valve needle 32 away from the outlet 123 has a limiting structure to ensure that the abutment portion 42 moves within the valve needle cavity 321 and prevent the abutment portion 42 from disengaging from the valve needle cavity 321. The rotary rod 40 is inserted into the valve core 20, and the rotary rod 40 is connected to the internal thread on the inner wall of the through hole 211 through the external thread.

When the rotary rod 40 rotates clockwise or counterclockwise, the rotary rod 40 moves downward and pushes the second magnetic component 342. Due to the repulsive force between the first magnetic component 341 and the second magnetic component 342, the first magnetic component 341 drives the valve needle 32 to move downward until the valve needle 32 blocks the outlet 123, thereby closing the outlet 123. When the rotary rod 40 rotates counterclockwise or clockwise, the rotary rod 40 moves upward until it abuts against the limiting structure and drives the valve needle 32 to move upward through the limiting structure. Meanwhile, the valve needle 32 disengages from the outlet 123 to open the outlet 123. The flow rate of the outlet 123 can be adjusted by adjusting the rising height of the valve needle 32.

At the same time, the closing of the outlet 123 by the valve needle 32 should ensure a certain degree of tightness. The greater the downward thrust received by the valve needle 32, the better the sealing performance of the valve needle 32 for the outlet 123. Since the magnetic properties of the opposite side surfaces of the second magnetic component 342 and the first magnetic component 341 are opposite, there is a repulsive force between the first magnetic component 341 and the second magnetic component 342. After the valve needle 32 abuts against and seals the outlet 123, if the rotary rod 40 continues to rotate, the valve needle 32 will only receive a downward thrust, making the combination of the valve needle 32 and the outlet 123 tighter, but the valve needle 32 will not rotate. Therefore, it can not only increase the sealing performance of the valve needle 32 for the outlet 123 but also avoid the wear caused by the relative rotation between the valve needle 32 and the outlet 123, thereby extending the service life of the expansion valve 100.

Therefore, by arranging the first magnetic component 341 and the second magnetic component 342 with opposite magnetic polarities inside the valve needle cavity 321 of the expansion valve 100, the repulsive force between the first magnetic component 341 and the second magnetic component 342 ensures that after the valve needle 32 abuts against and seals the outlet 123, the valve needle 32 will receive a downward thrust, and can avoid the wear caused by the relative rotation between the valve needle 32 and the outlet 123, thereby extending the service life of the expansion valve 100.

In some examples, as shown in FIG. 13, the first magnetic component 341 and the second magnetic component 342 are spaced apart from each other, and the first magnetic component 341 is in contact with the bottom wall of the valve needle cavity 321. For example, the first magnetic component 341 and the second magnetic component 342 are both located within the valve needle cavity 321, and the first magnetic component 341 is located on the side of the second magnetic component 342 away from the rotary rod 40 and is in contact with the bottom wall of the valve needle cavity 321. When the valve needle 32 moves upward, the repulsive force between the first magnetic component 341 and the second magnetic component 342 causes the upper surface of the second magnetic component 342 to adhere to the upper surface of the valve needle 32, and at the same time, the second magnetic component 342 is remained within the valve cavity 121, preventing the second magnetic component 342 from disengaging from the valve cavity 121 during the movement of the valve needle 32, so as to ensure the normal operation of the expansion valve 100.

Optionally, when the first magnetic component 341 is a magnet, the second magnetic component 342 can be any object that can generate a repulsive force with the magnet. Similarly, when the second magnetic component 342 is a magnet, the first magnetic component 341 can be any object that can generate a repulsive force with the magnet. For example, the first magnetic component 341 and the second magnetic component 342 can both be magnets. When the valve needle 32 closes the outlet 123 and the rotary rod 40 continues to rotate, the repulsive force between the first magnetic component 341 and the second magnetic component 342 can prevent the power of the rotary rod 40 from being transmitted to the valve needle 32. The valve needle 32 cannot rotate but can still be subjected to the downward force generated by the repulsive force, increasing the sealing of the valve needle 32 and the outlet 123.

In some examples, as shown in FIG. 12, the hole diameter of the through-hole 3231 is smaller than the maximum dimension of the second magnetic component 342 in the radial direction of the through-hole 3231. Therefore, the hole diameter of the through-hole 3231 should be smaller than the maximum dimension of the second magnetic component 342 in the radial direction of the through-hole 3231, ensuring a tight connection between the rotary rod 40 and the second magnetic component 342, and also preventing the second magnetic component 342 from entering the through-hole 3231 and affecting the normal operation of the expansion valve 100. When the rotary rod 40 drives the valve needle 32 to move upward, the abutment portion 42 can be prevented from disengaging from the through-hole 3231, so that the rotary rod 40 can drive the valve needle 32 to move along the axial direction of the housing 10, ensuring the normal operation of the expansion valve 100.

Optionally, the abutment portion 42 is fixedly connected to the second magnetic component 342. Meanwhile, the abutment portion 42 of the rotary rod 40 is fixedly connected to the second magnetic component 342. As the second magnetic component 342 moves axially along the rotary rod 40 under the influence of the first magnetic component 341, the rotary rod 40 and the second magnetic component 342 move together, which simplifies the structure of the valve needle assembly 30, and reduces the installation process, and improves the installation efficiency. It also avoids the gap between the second magnetic component 342 and the abutment portion 42 which could affect the stroke of the valve needle 32, and increases the sealing of the abutment between the valve needle 32 and the outlet 123. Meanwhile, the abutment portion 42 can use the second magnetic component 342 for positioning, and even if the diameter of the abutment portion 42 is smaller than the diameter of the through-hole 3231, the abutment portion 42 can be prevented from disengaging from the valve needle cavity 321.

In some examples, as shown in FIG. 13, a fitting groove 3421 is formed on one side of the second magnetic component 342 adjacent to the rotary rod 40, and the other end of the rotary rod 40 is matched in the fitting groove 3421. For example, the fitting groove 3421 is formed in the middle of the second magnetic component 342, and the diameter of the fitting groove 3421 is slightly smaller than the diameter of the rotary rod 40, so that the rotary rod 40 can be interference-fitted in the fitting groove 3421, thereby ensuring the reliability of the connection between the second magnetic component 342 and the rotary rod 40, so that when the rotary rod 40 rotates clockwise or counterclockwise and moves up and down, the second magnetic component 342 is prevented from being separated from the rotary rod 40, thereby driving the valve needle 32 to move up and down, and the installation method is simple and easy to operate.

In some examples, as shown in FIG.2, FIG.4 and FIG.14, an anti-rotation limiting structure 710 is arranged on the valve core 20, a guide groove 24 is formed on the outer circumferential surface of the valve core 20 and extends spirally along the axial direction of the valve core 20, an anti-rotation component 25 is arranged in the guide groove 24, the anti-rotation component 25 is in guiding engagement with the guide groove 24, the height of each turn of the anti-rotation component 25 in the axial direction of the valve core 20 is smaller than the width of each turn of the anti-rotation component 25 in the radial direction of the valve core 20, and the height of each turn of the anti-rotation component 25 in the axial direction of the valve core 20 is smaller than the height of the guide groove 24 in the axial direction. In the process of the driving member 50 driving the rotary rod 40 to rotate, the driving member 50 drives the anti-rotation component 25 to move within the guide groove 24, and the driving member 50 stops rotating when the anti-rotation component 25 abuts against the anti-rotation limiting structure 710.

A valve cavity 121 is defined between the valve body 12 and the shell 11, and the valve needle 32 is arranged in the valve cavity 121. The valve needle 32 is connected to the driving member 50. When the driving member 50 rotates, the driving member 50 drives the valve needle 32 to move between a connected position connecting the inlet 122 and the outlet 123 and a blocking position blocking the inlet 122 and the outlet 123 through the rotary rod 40. Moreover, during the rotation of the driving member 50, the driving member 50 drives the anti-rotation component 25 to move within the guide groove 24, and the driving member 50 stops rotating when the anti-rotation component 25 abuts against the anti-rotation limiting structure 710. For example, when the driving member 50 drives the valve needle 32 to move from the blocking position to the connected position through the rotary rod 40, the driving member 50 can rotate counterclockwise to drive the valve needle 32 to move relative to the valve core 20 in a direction away from the outlet 123. During the movement of the driving member 50, the anti-rotation component 25 moves along the guide groove 24 toward the end of the guide groove 24 away from the outlet 123. When the anti-rotation component 25 abuts against the anti-rotation limiting structure 710 set at the end of the valve core 20 away from the outlet 123, the driving member 50 stops rotating to place the valve needle 32 in the connected position.

Therefore, the height of each turn of the anti-rotation component 25 in the axial direction of the valve core 20 is smaller than the height of the guide groove 24 in the axial direction. This design ensures that the height of each turn of the anti-rotation component 25 in the axial direction of the valve core 20 is smaller than the height of the guide groove 24. As a result, it increases the space for the anti-rotation component 25 to move in the axial direction of the valve core 20 within the guide groove 24, which can effectively improve the jamming phenomenon of the anti-rotation component 25 during the movement along the guide groove 24, and reduce the force wear between the anti-rotation component 25 and the guide groove 24 during rotation, and extend the service life of the anti-rotation component 25. Meanwhile, the height of each turn of the anti-rotation component 25 in the axial direction of the valve core 20 is smaller than the width of each turn of the anti-rotation component 25 in the radial direction of the valve core 20. By increasing the width of each turn in the radial direction of the valve core 20, the structural strength of the anti-rotation component 25 can be improved. This ensures the reliability when the anti-rotation component 25 abuts against the anti-rotation limiting structure 710, enabling the anti-rotation component 25 to maintain better stability during the movement.

In some examples, as shown in FIG. 14, the cross-sectional shape of the anti-rotation component 25 is non-circular. For example, the cross-sectional shape of the anti-rotation component 25 may be rectangular, elliptical, or triangular. Therefore, the cross-sectional shape of the anti-rotation component 25 is non-circular, which can facilitate the anti-rotation component 25 being spaced apart from the guide groove 24 in the axial direction of the valve core 20, and reduce the possibility of the anti-rotation component 25 coming into contact with the side wall of the guide groove 24. Here, the cross-sectional shape of the anti-rotation component 25 is rectangular as an example for explanation, and the anti-rotation component 25 extends spirally along the extension direction of the guide groove 24. The size of the rectangular anti-rotation component 25 in the axial direction of the valve core 20 may be smaller than its size in the radial direction of the valve core 20, which facilitates the anti-rotation component 25 to be spaced apart from the guide groove 24 in the axial direction of the valve core 20. Meanwhile, the larger dimension in the radial direction of the valve core 20 can increase the width of the valve core 20 in the radial direction, so that the anti-rotation component 25 maintains a high structural strength, and avoids the reduction of the structural strength of the anti-rotation component 25 due to the small dimension of each turn of the anti-rotation component 25 in the axial direction of the valve core 20.

In some examples, the width of each turn of the anti-rotation component 25 in the radial direction of the valve core 20 is L1, and the height of each turn of the anti-rotation component 25 in the axial direction of the valve core 20 is L2, wherein L1 and L2 satisfy the condition: 2≤L1/L2≤3. For example, L1/L2=2. If the ratio of the width L1 to the height L2 is less than 2, it may be due to the relatively small width of each turn of the anti-rotation component 25 in the radial direction, the structural strength of the anti-rotation component 25 is likely to decrease. When the anti-rotation component 25 abuts against the anti-rotation limiting structure 710, it may break or undergo plastic deformation, affecting the use of the anti-rotation component 25. If the ratio of the width L1 to the height L2 is greater than 3, it may result in a relatively large force between the anti-rotation component 25 and the guide groove 24 in the radial direction of the valve core 20. In this case, the anti-rotation component 25 cannot rotate in a timely manner within the guide groove 24, which affects the movement of the valve needle 32 between the blocking position and the connected position, and increases the manufacturing cost of the anti-rotation component 25.

In some examples, as shown in FIG.14, at least one end of the anti-rotation component 25 is arranged with an anti-rotation portion 251, the anti-rotation portion 251 extends in a direction away from the center of the anti-rotation component 25 and the anti-rotation portion 251 abuts against the inner wall surface of the driving member 50. Specifically, during the movement of the driving member 50, the anti-rotation component 25 abuts against the driving member 50 through the anti-rotation portion 251, thereby achieving synchronous movement with the driving member 50. When the anti-rotation component 25 abuts against the anti-rotation limiting structure 710, the driving member 50 stops working. Therefore, by arranging the anti-rotation portion 251 at one end of the anti-rotation component 25, it is convenient for the anti-rotation component 25 to abut against the driving member 50, enabling the anti-rotation component 25 to move along with the driving member 50. Moreover, it can promptly stop the rotation of the driving member 50, protecting the driving member 50, so that the valve needle 32 can move precisely between the connected position and the blocking position.

In some examples, as shown in FIG.15, on the inner wall surface of the driving member 50, there is a rib 51 extending along the axial direction of the valve core 20, and the anti-rotation portion 251 is adapted to abut against the rib 51. The rib 51 extends along the axial direction of the valve core 20. Alternatively, a third recess is formed on the inner wall surface of the driving member 50, and the anti-rotation portion 251 fits in the third recess. Both the rib 51 and the third recess can be located on the surface of the driving member 50 adjacent to the valve core 20, and extend along the axial direction of the valve core 20. Thus, the rib 51 or the third recess is arranged on the inner wall surface of the driving member 50 so that it becomes easier for the driving member 50 to abut against the anti-rotation component 25, so that when the driving member 50 rotates, the anti-rotation component 25 can rotate, and the structure and principle for realizing the rotation of the anti-rotation component 25 are simple.

In some examples, as shown in FIG.4, the anti-rotation limiting structure 710 comprises a first limiting protrusion 71 and a second limiting protrusion 72. The first limiting protrusion 71 and the second limiting protrusion 72 are respectively located at both ends of the guide groove 24. The anti-rotation component 25 can move between the first anti-rotation position and the second anti-rotation position. When the anti-rotation component 25 is located at the first anti-rotation position, the anti-rotation component 25 abuts against the first limiting protrusion 71; when the anti-rotation component 25 is located at the second anti-rotation position, the anti-rotation component 25 abuts against the second limiting protrusion 72. For example, when the valve needle 32 is in the blocking position, the position where the anti-rotation component 25 is located is the first anti-rotation position, and in the first anti-rotation position, the anti-rotation component 25 abuts against the first limiting protrusion 71; when the valve needle 32 is in the connected position, the position where the anti-rotation component 25 is located is the second anti-rotation position, and in the second anti-rotation position, the anti-rotation component 25 abuts against the second limiting protrusion 72. Therefore, the second limiting protrusion 72 and the first limiting protrusion 71 are respectively located at the two ends of the guide groove 24, that is, the end of the guide groove 24 away from the outlet 123 and the end of the guide groove 24 adjacent to the outlet 123.The first limiting protrusion 71 and the second limiting protrusion 72 can abut against the anti-rotation component 25 at both ends of the guide groove 24, so as to limit the position of the anti-rotation component 25. This prevents the anti-rotation component 25 from disengaging from the guide groove 24, which may lead to the failure of the anti-rotation component 25, thereby increasing the safety of using the expansion valve 100.

In some examples, as shown in FIG.4, the anti-rotation limiting structure 710 comprises a first limiting protrusion 71 and a second limiting protrusion 72. At least one flat portion 26 is arranged on the outer circumferential surface of the valve core 20. The first limiting protrusion 71 and the second limiting protrusion 72 are arranged on the flat portion 26. The anti-rotation component 25 can move between the first anti-rotation position and the second anti-rotation position, enabling the valve core 20 to move in the axial direction of the valve core 20 and realizing the opening or closing of the outlet 123. The first anti-rotation position is located at one end adjacent to the outlet 123, and the second anti-rotation position is located at one end of the valve core 20 away from the outlet 123. When the anti-rotation component 25 is located at the first anti-rotation position, the anti-rotation component 25 abuts against the first limiting protrusion 71, and the outlet 123 is closed; when the anti-rotation component 25 is located at the second anti-rotation position, the anti-rotation component 25 abuts against the second limiting protrusion 72, and the outlet 123 is opened. For example, when the anti-rotation component 25 moves from the first anti-rotation position to the second anti-rotation position, the valve needle 32 moves from the blocking position to the connected position. The second limiting protrusion 72 and the first limiting protrusion 71 are respectively located at the end of the guide groove 24 away from the outlet 123 and the end of the guide groove 24 adjacent to the outlet 123 .

Furthermore, two flat portions 26 are arranged on the outer circumferential surface of the valve core 20, and the two flat portions 26 extend along the axial direction of the valve core 20 and are opposite to each other in the radial direction of the valve core 20. The first limiting protrusion 71 and the second limiting protrusion 72 are arranged at least at two ends of one flat portion 26 along the axial direction of the valve core 20. The first limiting protrusion 71 is arranged on the flat portion 26 at the end of the guide groove 24 adjacent to the outlet 123, and the second limiting protrusion 72 is arranged on the flat portion 26 at the end of the guide groove 24 away from the outlet 123. When the anti-rotation component 25 moves to the end of the guide groove 24 adjacent to the outlet 123, it abuts against the first limiting protrusion 71; when the anti-rotation component 25 moves to the end of the guide groove 24 away from the outlet 123, it abuts against the second limiting protrusion 72. Therefore, arranging the flat portion 26 facilitates the placement of the first limiting protrusion 71 and the second limiting protrusion 72. The first limiting protrusion 71 and the second limiting protrusion 72 can timely restrict the continuous rotation of the anti-rotation component 25 when the anti-rotation component 25 is about to disengage from the guide groove 24, thereby limiting the anti-rotation component 25 and preventing the anti-rotation component 25 from disengaging from the guide groove 24.

Optionally, the guide groove 24 can be formed on the outer circumferential surface of the valve core 20 and configured as a groove that is recessed towards the center of the valve core 20. The groove extends spirally along the axial direction of the valve core 20. The side walls at both ends of the groove, that is, the side wall of the guide groove 24 at the end adjacent to the outlet 123 can be configured as a first limiting protrusion 71, and the side wall of the guide groove 24 at the end away from the outlet 123 can be configured as a second limiting protrusion 72. This arrangement uses the side walls at both ends of the guide groove 24 to limit the anti-rotation component 25.

In some examples, as shown in FIG. 18 and FIG. 19, the housing 10 comprises a valve seat 1268, the valve seat 1268 is arranged at the outlet 123 and aligned with the outlet 123, and the valve seat 1268 is arranged with a valve seat outlet 1267 that is in communication with the outlet 123. When the valve needle assembly 30 is in the closed position, the valve needle assembly 30 blocks the valve seat outlet 1267 to cut off the communication between the inlet 122 and the outlet 123; when the valve needle assembly 30 is in the open position, the valve needle assembly 30 is separated from the valve seat outlet 1267, allowing the communication between the inlet 122 and the outlet 123. For example, the valve seat outlet 1267 is located above the outlet 123 of the expansion valve 100. When the valve needle 32 is in the closed position, the valve needle 32 blocks the valve seat outlet 1267 to cut off the communication between the inlet 122 and the outlet 123. At this time, the refrigerant can be temporarily stored in the sliding space 222 after flowing into the sliding space 222 through the inlet 122, and the refrigerant cannot flow out from the outlet 123. When the valve needle 32 is in the open position, the valve needle assembly 30 is separated from the valve seat outlet 1267, allowing the communication between the inlet 122 and the outlet 123. At this time, the refrigerant within the sliding space 222 can sequentially flow through the valve seat outlet 1267 and the outlet 123 and then flow to the outside of the expansion valve 100. Therefore, arranging the valve seat 1268 strengthens the assembly relationship between the valve needle 32 and the second valve body 1262, and improves the adjustment accuracy of the refrigerant at the outlet 123 of the expansion valve 100. Additionally, it is easy to machine the valve seat 1268 to manufacture the valve seat outlet 1267 in the desired shape, so as to achieve the desired flow curve and meet the design requirements of the expansion valve 100.

In some examples, referring to FIG. 17 , the valve seat outlet 1267 comprises a first outlet segment 1269 and a second outlet segment 1270 that are in communication with each other, the first outlet segment 1269 is in communication with the interior of the valve cavity 121, the second outlet segment 1270 is connected between the first outlet segment 1269 and the outlet 123, and the cross-sectional area of the second outlet segment 1270 and the cross-sectional area of the outlet 123 gradually increase along the direction away from the outlet 123. Therefore, when the valve needle 32 is in the open position, the refrigerant in the sliding space 222 can flow through the first outlet segment 1269, the second outlet segment 1270 and the outlet 123 in sequence and then flow out, which is beneficial for the refrigerant to flow between the inlet 122 and the outlet 123, increasing the contact area between the refrigerant and the second outlet segment 1270 as well as the outlet 123, and ensures efficient outflow of refrigerant from the expansion valve 100.

In some examples, as shown in FIG.17, the cross-sectional area of the first outlet segment 1269 gradually increases in the direction away from the outlet 123. Thus, the first outlet segment 1269 provides a guiding function for the lower end of the valve needle 32, which facilitates the valve needle 32 to move to the closed position. Moreover, the lower end of the valve needle 32 and the first outlet segment 1269 can be matched more compactly. When the valve needle 32 is in the closed position, the refrigerant in the sliding space 222 is less likely to leak. In addition, the first outlet segment 1269 provides a guiding function for the refrigerant, so that the refrigerant can flow to the outlet 123 more smoothly.

In some examples, the first outlet segment 1269 is formed as a first rotational surface. With such an arrangement, it is more beneficial for the refrigerant to flow between the inlet 122 and the outlet 123, thereby being more beneficial for the normal operation of the expansion valve 100. In addition, the structure of the valve seat 1268 is simple, making it easier to manufacture and process.

As shown in FIG. 17, the second outlet segment 1270 is formed as a second rotational surface. That is, in a direction away from the center of the sliding space 222, the inner wall surface of the second outlet segment 1270 extends in a curved manner towards the direction away from the central axis of the second valve body 1262. This is further beneficial for the refrigerant to flow from the expansion valve 100, and can also meet the customer's requirements for the refrigerant flow design. It should be noted that the curvature of the first rotational surface and the second rotational surface can be specifically set according to actual conditions to better meet the practical requirements.

In some examples, referring to FIG. 1 and FIG. 6, the outlet 123 is formed as a third rotational surface, the curvature of the third rotational surface is identical to that of the second rotational surface, and the third rotation curved surface is connected to the second rotational surface to form a rotational surface. With such an arrangement, it is beneficial for the refrigerant to flow from the second outlet segment 1270 to the outlet 123, the refrigerant flows more smoothly. Moreover, it can also meet the customers' requirements for the refrigerant flow design. It should be noted that the curvature of the third rotational surface and the second rotational surface can be specifically set according to actual conditions to better meet the practical requirements.

In some examples, with reference to FIG. 1, the valve body 12 is an integrally formed component. With such an arrangement, on the one hand, the structure of the valve body 12 is simple, which is beneficial to the production and processing of the valve body 12, and is also conducive to the assembly of the valve body 12 and the shell 11. This simplifies the assembly of the expansion valve 100 and can improve the production efficiency of the expansion valve 100. On the other hand, it reduces the use of additional connectors and fasteners on the valve body 12, thereby decreasing the number of components in the expansion valve 100, making its structure simpler and reducing the production costs. According to the expansion valve 100 of the example of the present disclosure, by arranging the valve body 12 as an integrally formed component, the structure of the valve body 12 is simple, which is conducive to the assembly of the valve body 12 and the shell 11. This simplifies the assembly of the expansion valve 100 and improves the production efficiency of the expansion valve 100. Moreover, the expansion valve 100 has fewer components, thereby reducing production cost of the expansion valve 100.

In some examples, with reference to FIG. 1, the driving member 50 further comprises: a stator assembly and a rotor assembly 53. The stator assembly is located outside the housing 10, the rotor assembly 53 is disposed in the valve cavity 121, the rotor assembly 53 is connected to the rotary rod 40, and when the driving mechanism is working, the rotor assembly 53 drives the rotary rod 40 to move relative to the housing 10 under the magnetic field of the stator assembly. The stator assembly may comprise a driving motor with a stator coil and a controller. When powered on, the controller may send a pulse driving signal to the stator coil, so that the stator coil generates a periodically changing magnetic field. Thus, through the change of the magnetic field, the controller controls the forward or reverse rotation of the rotor assembly 53 arranged inside the shell 11 around the central axis of the rotary rod 40. The rotor assembly 53 comprises a magnet, a connecting portion 1266 and a stop portion. The magnet is arranged along the inner circumferential surface of the shell 11. The connecting portion 1266 is arranged at the end of the rotary rod 40 away from the valve seat 1268 and is sleeved on the rotary rod 40 to be fixedly connected to it. The outer circumference of the connecting portion 1266 abuts against one side of the magnet adjacent to the rotary rod 40, and can rotate together with the magnet, thereby driving the rotary rod 40 to rotate and realizing the movement of the rotary rod 40 in the direction of the central axis. One end of the stop portion is connected to the connecting portion 1266, and the other end of the stop portion extends toward the valve seat 1268 along the central axis of the rotary rod 40.

In the description of the present disclosure, it should be understood that terms such as "center", "longitudinal", "lateral", "length", "width", "thickness", "up", "down", "front", "back", "left", "right", "vertical", "horizontal", "top", "bottom", "inner", "outer", "clockwise", "counterclockwise", "axial", "radial", "circumferential", etc., indicate the orientation or positional relationship based on the orientation or positional relationship shown in the accompanying drawings. These are merely for the convenience of describing the present disclosure and simplifying the description, rather than indicating or implying that the device or element referred to must have a specific orientation, be constructed and operated in a specific orientation, and thus should not be construed as limiting the present disclosure.

In the description of the present disclosure, the meaning of "a plurality of" is two or more. In the description of the present disclosure, for a first feature being "above" or "below" a second feature, it can mean that the first and the second features are in direct contact, or it can mean that the first and second features are not in direct contact but in contact through another feature between them. In the description of the present disclosure, a first feature is "beneath", "below" or "under" the second feature, it can mean that the first feature is directly below or diagonally below the second feature, or it merely indicates that the first feature is at a higher horizontal level than the second feature.

In the description of this specification, reference to the terms "one example", "some examples", "illustrative examples", "examples", "specific examples" or "some examples" is intended to signify that specific features, structures, materials, or characteristics that is comprised in at least one example or example of the present disclosure. In this specification, schematic representations of the above terms do not necessarily refer to the same example or example.

Although the examples of the present disclosure have been shown and described, a person of ordinary skill in the art should understand that various changes, modifications, replacements and variations may be made to the examples without departing from the principles and purposes of the present disclosure. The scope of the disclosure is defined by the claims and their equivalents.

## Claims

1. An expansion valve (100), comprising:
a housing(10), wherein a valve cavity (121) being defined inside the housing (10), and an inlet (122) and an outlet (123) being formed on the housing (10), both the inlet (122) and the outlet (123) being in communication with the valve cavity (121);
a valve core (20), the valve core (20) being arranged in the valve cavity (121), a through hole (211) being formed in the valve core (20), and the inner wall of the through hole (211) being arranged with a first thread (2111);
a valve needle assembly (30), the valve needle assembly (30) being movably arranged in the valve cavity (121);
a rotary rod (40), the rotary rod (40) being arranged with a second thread (41) matching the first thread (2111), the rotary rod (40) and the through hole (211) being rotationally matched via the first thread (2111) and the second thread (41), and the valve needle assembly (30) being arranged at one end of the rotary rod (40); and
a driving member (50), the driving member (50) being used for driving the rotary rod (40) to rotate relative to the valve core (20), to cause the rotary rod (40) to move in the axial direction of the rotary rod (40) so as to drive the valve needle assembly (30) to close or open the outlet (123);
wherein at least one positioning groove (13) is formed in one of the valve core (20) and the housing (10), and at least one positioning protrusion (221) is arranged on the other of the valve core (20) and the housing (10), and the positioning protrusion (221) is matched and fixed to the positioning groove (13).

2. The expansion valve (100) according to claim 1, wherein the housing (10) comprises:
a shell (11), one end of the shell (11) in the axial direction of the shell (11) is arranged with an opening (111); and
a valve body (12), the valve body (12) is arranged at the opening (111), the valve body (12) and the shell (11) jointly define the valve cavity (121), the inlet (122) and the outlet (123) are both arranged on the valve body (12), and the valve core (20) is in guiding engagement with the valve body (12) along a first direction.

3. The expansion valve (100) according to claim 2 ,wherein at least a portion of the valve core (20) is located in the valve body (12), the positioning groove (13) is arranged on the valve body (12), and the positioning protrusion (221) is arranged on the valve core (20), and the positioning groove (13) matches with the positioning protrusion (221) to limit the movement of the valve core (20) relative to the valve body (12) along the first direction.

4. The expansion valve (100) according to claim 3, wherein the positioning groove (13) is arranged with a first limiting portion (135), and the first limiting portion (135) abuts against the positioning protrusion (221) along the first direction, to ensure the first limiting portion (135) limits the movement of the positioning protrusion (221) along a second direction, and the second direction is opposite to the first direction.

5. The expansion valve (100) according to claim 4, wherein the positioning groove (13) is arranged with a first notch (131) at one end of the valve body (12) along the second direction, and the first notch (131) is designed for the positioning protrusion (221) to pass through along the first direction.

6. The expansion valve (100) according to claim 4 or 5, wherein the positioning groove (13) comprises a first recess wall (132) and a second recess wall (133), the first recess wall (132) and the second recess wall (133) are arranged opposite to each other, and the first limiting portion (135) is fixedly connected to the first recess wall (132).

7. The expansion valve (100) according to claim 6, wherein the first limiting portion (135) is integrally connected to the first recess wall (132).

8. The expansion valve (100) according to claim 7, wherein the valve body (12) is arranged with a first relief groove (124) adjacent to the positioning groove (13), and the first limiting portion (135) is positioned between the positioning groove (13) and the first relief groove (124).

9. The expansion valve (100) according to claim 8, wherein the first relief groove (124) is arranged with a second notch (1241) at one end of the valve body (12) along the second direction.

10. The expansion valve (100) according to claim 6 or 7, wherein the positioning groove (13) is arranged with a second limiting portion, the second limiting portion is fixedly connected to the second recess wall (133), the second limiting portion abuts against the positioning protrusion (221) along the first direction, and the valve body (12) is arranged with a second relief groove (125) adjacent to the positioning groove (13), and the second limiting portion is positioned between the positioning groove (13) and the second relief groove (125).

11. The expansion valve (100) according to claim 10, wherein the first relief groove (124) and the second relief groove (125) are located on both sides of the positioning groove (13).

12. The expansion valve (100) according to any one of claims 4 to 11, wherein the positioning groove (13) is arranged with a third notch facing the valve core (20).

13. The expansion valve (100) according to any one of claims 4 to 12, wherein the positioning groove (13) is arranged with a third limiting portion, and the third limiting portion abuts against the positioning protrusion (221) along the second direction.

14. The expansion valve (100) according to any one of claims 4 to 13, wherein the positioning groove (13) features an abutment surface (134) and the positioning protrusion (221) abuts against the abutment surface (134) along the first direction.

15. The expansion valve (100) according to any one of claims 3 to 14, wherein the positioning groove(13) is arranged at an end of the valve body (12) away from the first direction.

16. The expansion valve (100) according to any one of claims 3 to 15, wherein the valve core (20) is arranged with a relief plane (23) corresponding to the positioning protrusion (221), and the relief plane (23) is disposed at a side of the positioning protrusion (221) away from the first direction.

17. The expansion valve (100) according to any one of claims 3 to 16, wherein the number of the positioning grooves (13) is two, the two positioning grooves (13) are symmetrically arranged about the axis of the valve core (20), and the valve core (20) is arranged with two positioning protrusions (221), and the two positioning protrusions (221) are respectively mated in the two positioning grooves (13).

18. The expansion valve (100) according to any one of claims 2 to 17, wherein the valve core (20) comprises:
a threaded portion (21), a through hole (211) is formed in the threaded portion (21); and
an extension portion (22), one end of the extension portion (22) away from the threaded portion (21) extends into the valve body (12), and an outer wall surface of the extension portion (22) is in guiding engagement with the valve body (12) along the first direction.

19. The expansion valve (100) according to claim 18, wherein the valve body (12) is arranged with a step portion (126), the step portion (126) has a step surface (1260) that deviates from the first direction, and one end of the extension portion (22) that is away from the threaded portion (21) abuts against the step surface (1260).

20. The expansion valve (100) according to claim 18 or 19, wherein a sliding space (222) is formed in the extension portion (22), the sliding space (222) is in communication with the through hole (211), the sliding space (222) has an inner wall surface (2222) extending along the first direction, and the valve needle assembly (30) is in guiding engagement with the inner wall surface (2222) of the sliding space (222).

21. The expansion valve (100) according to claim 20, wherein the valve needle assembly (30) is arranged with a guide protrusion (31) protruding toward the inner wall surface (2222) of the sliding space (222), and the valve needle assembly (30) is in guiding engagement with the inner wall surface (2222) of the sliding space (222) through the guide protrusion (31).

22. The expansion valve (100) according to claim 21, wherein the valve needle assembly (30) is arranged with two guide protrusions (31), and the two guide protrusions (31) are symmetrically arranged about the axis of the valve needle assembly (30).

23. The expansion valve (100) according to any one of claims 2 to 22, wherein at least a portion of the valve body (12) is located inside the shell (11), and at least a portion of the outer wall surface of the valve body (12) is fixedly connected to the inner wall surface of the shell (11).

24. The expansion valve (100) according to any one of claims 2 to 23, wherein the valve body (12) comprises:
a first valve body (1261); and
a second valve body (1262), the valve cavity (121) is defined among the second valve body (1262), the first valve body (1261) and the shell (11), the second valve body (1262) is arranged at one end of the first valve body (1261) away from the shell (11), the outlet (123) and the inlet (122) are formed on the second valve body (1262), and the outlet (123) and the inlet (122) are both in communication with the valve cavity (121).

25. The expansion valve (100) according to claim 24, wherein a fitting hole (12610) is formed in the first valve body (1261) and extends through along the axial direction of the rotary rod (40), and the valve core (20) is arranged with a valve core connecting portion (201), and the valve core connecting portion (201) extends into the fitting hole (12610) from the end of the first valve body (1261) away from the second valve body (1262), and the valve core connecting portion (201) is in guiding engagement with the fitting hole (12610) along the first direction.

26. The expansion valve (100) according to claim 25, wherein the fitting hole (12610) comprises a first hole segment (1263) and a second hole segment (1264) distributed along the axial direction of the rotary rod (40), the first hole segment (1263) is connected to an end of the second hole segment (1264) away from the second valve body (1262), the positioning groove (13) is arranged on the first hole segment (1263), the positioning protrusion (221) is arranged on the valve core connecting portion (201), and the second hole segment (1264) is in guiding engagement with the valve core connecting portion (201).

27. The expansion valve (100) according to any one of claims 1 to 26, wherein the valve needle assembly (30) comprises:
a valve needle (32), the valve needle (32) is arranged with a valve needle cavity (321); and
an elastic component (33), the elastic component (33) is arranged in the valve needle cavity (321) along the axial direction of the rotary rod (40), the two ends of the elastic component (33) along the axial direction of the rotary rod (40) are respectively a first end and a second end, where the first end abuts against the valve needle (32), and the second end abuts against the rotary rod (40);
wherein, the end of the rotary rod (40) is arranged with an abutment portion (42), and the abutment portion (42) has an arc surface (422), the abutment portion (42) is located within the valve needle cavity (321) and is movable along the axial direction of the rotary rod (40), and the arc surface (422) abuts against the second end of the elastic component (33).

28. The expansion valve (100) according to claim 27, wherein the abutment portion (42) is a ball head.

29. The expansion valve (100) according to claim 27 or 28, wherein a through-hole (3231) is formed in the valve needle (32) and extends through along the axial direction of the rotary rod (40) to the valve needle cavity (321), and the rotary rod (40) comprises a rod portion (44) and the abutment portion (42), the radial dimension of the rod portion (44) is smaller than the hole diameter of the through-hole (3231), the rod portion (44) passes through the through-hole (3231), and the rod portion (44) is fixedly connected to the abutment portion (42).

30. The expansion valve (100) according to claim 29, wherein the rod portion (44) and the abutment portion (42) are integrally formed.

31. The expansion valve (100) according to claim 29 or 30, wherein the through-hole (3231) comprises:
a first connection segment (3232); and
a second connection segment (3233), the second connection segment (3233) and the first connection segment (3232) are distributed along the axial direction of the rotary rod (40), the second connection segment (3233) is in communication with the valve needle cavity (321), the cross-sectional area of the second connection segment (3233) gradually increases in a direction toward the valve needle cavity (321), and the inner side wall of the second connection segment (3233) is designed for abutting against the abutment portion (42);
the abutment portion (42) is arranged with a fitting surface (421), and the fitting surface (421) is designed for abutting against and being limited by the inner side wall of the second connection segment (3233) , and the first recess (43) is formed on the fitting surface (421).

32. The expansion valve (100) according to claim 31, wherein at least a portion of the inner wall of the second connection segment (3233) is a plane and the plane is designed for abutting against the abutment portion (42).

33. The expansion valve (100) according to any one of claims 27 to 32, wherein the elastic component (33) comprises:
an elastic element (331); and
a support component (332), the support component (332) is arranged between the abutment portion (42) and the elastic element (331).

34. The expansion valve (100) according to claim 33, wherein the support component (332) comprises:
a stop portion (3321), a side surface of the stop portion (3321) facing the rotary rod (40) abuts against the abutment portion (42); and
a guide portion (3322), the guide portion (3322) is connected to a side of the stop portion (3321) away from the rotary rod (40), the cross-sectional area of the guide portion (3322) is smaller than the cross-sectional area of the stop portion (3321), the elastic element (331) is at least partially sleeved on the guide portion (3322), and the elastic element (331) abuts between a side surface of the stop portion (3321) that is away from the rotary rod (40) and an inner wall of the valve needle cavity (321) on the side away from the rotary rod (40).

35. The expansion valve (100) according to claim 33 or 34, wherein the elastic component (33) comprises an elastic element (331), and the abutment portion (42) is in direct contact with the elastic element (331).

36. The expansion valve (100) according to claim 35, wherein the second end of the elastic element (331) has a bent segment (3311) and the bent segment (3311) extends in the direction toward the central axis of the elastic element (331) and the bent segment (3311) abuts against the abutment portion (42).

37. The expansion valve (100) according to claim 36, wherein the elastic element (331) is coaxially arranged with the rotary rod (40), and the free end of the bent segment (3311) is located at the central axis of the elastic element (331).

38. The expansion valve (100) according to claim 36 or 37, wherein the surface of one side of the bent segment (3311) in contact with the abutment portion (42) is flat.

39. The expansion valve (100) according to any one of claims 29 to 32, wherein an air exchange channel (60) is defined between the inner wall of the through-hole (3231) and the rotary rod (40), one end of the air exchange channel (60) is in communication with the valve cavity (121), and the other end of the air exchange channel (60) is in communication with the valve needle cavity (321).

40. The expansion valve (100) according to claim 39, wherein a first recess (43) is formed at a position of the rotary rod (40) opposite to the inner wall of the through-hole (3231), and the inner wall of the through-hole (3231) and the first recess (43) jointly define the air exchange channel (60).

41. The expansion valve (100) according to claim 40, wherein along the axial direction of the rotary rod (40), the length of the first recess (43) is greater than the length of the through-hole (3231).

42. The expansion valve (100) according to any one of claims 39 to 41, wherein a second recess (32311) is formed on the inner wall of the through-hole (3231), and the second recess (32311) and the rotary rod (40) jointly define the air exchange channel (60).

43. The expansion valve (100) according to any one of claims 39 to 42 , wherein there are a plurality of air exchange channels (60), and the plurality of air exchange channels (60) are arranged at intervals along the circumference of the rotary rod (40).

44. The expansion valve (100) according to any one of claims 1 to 32, wherein the valve needle assembly (30) comprises:
a valve needle (32), the valve needle (32) is arranged with a valve needle cavity (321);
a first magnetic component (341); and
a second magnetic component (342), the second magnetic component (342) and the first magnetic component (341) are arranged in the valve needle cavity (321) along the axial direction of the rotary rod (40), the first magnetic component (341) abuts against the valve needle (32) on a side away from the rotary rod (40), the second magnetic component (342) is movably arranged between the rotary rod (40) and the first magnetic component (341), the second magnetic component (342) is in guiding engagement with the valve needle (32) along the axial direction of the rotary rod (40), and the magnetism polarities of the sides of the second magnetic component (342) and the first magnetic component (341) facing each other are opposite,
wherein, the one end of the rotary rod (40) is arranged with an abutment portion (42), and the abutment portion (42) is movably arranged in the valve needle cavity (321) and abuts against the second magnetic component (342).

45. The expansion valve (100) according to claim 44, wherein the valve needle (32) is arranged with a through-hole (3231) in communication with the valve needle cavity (321), the rotary rod (40) passes through the through-hole (3231), the abutment portion (42) abuts against the second magnetic component (342), and the hole diameter of the through-hole (3231) is smaller than the maximum dimension of the second magnetic component (342) in the radial direction of the through-hole (3231).

46. The expansion valve (100) according to claim 45, wherein the abutment portion (42) is fixedly connected to the second magnetic component (342).

47. The expansion valve (100) according to any one of claims 44 to 46, wherein a fitting groove (3421) is formed on one side of the second magnetic component (342) adj acent to the rotary rod (40), and the other end of the rotary rod (40) is matched in the fitting groove (3421).

48. The expansion valve (100) according to any one of claims 1 to 47, wherein an anti-rotation limiting structure (710) is arranged on the valve core (20), a guide groove (24) is formed on the outer circumferential surface of the valve core (20) and extends along an axial spiral direction of the valve core (20), an anti-rotation component (25) is arranged in the guide groove (24), the anti-rotation component (25) is in guiding engagement with the guide groove (24), the height of each turn of the anti-rotation component (25) in the axial direction of the valve core (20) is smaller than the width of each turn of the anti-rotation component (25) in the radial direction of the valve core (20), and the height of each turn of the anti-rotation component (25) in the axial direction of the valve core (20) is smaller than the height of the guide groove (24) in the axial direction;
when the driving member (50) drives the rotary rod (40) to rotate, the driving member (50) drives the anti-rotation member (25) to move within the guide groove (24), and when the anti-rotation member (25) abuts against the anti-rotation limiting structure (710), the driving member (50) stops rotating.

49. The expansion valve (100) according to claim 48, wherein the width of each turn of the anti-rotation component (25) in the radial direction of the valve core (20) is L1, and the height of each turn of the anti-rotation component (25) in the axial direction of the valve core (20) is L2, wherein L1 and L2 satisfy: 2≤L1/L2≤3.

50. The expansion valve (100) according to claim 25 or 26, wherein the second valve body (1262) is arranged with a connecting portion (1266), and the connecting portion (1266) extends into the fitting hole (12610) from one end of the first valve body (1261) away from the valve core (20), and the connecting portion (1266) is fixedly connected to the first valve body (1261).

51. The expansion valve (100) according to any one of claims 1 to 50, wherein the housing (10) comprises a valve seat (1268), the valve seat (1268) is arranged corresponding to the outlet (123), and the valve seat (1268) is arranged with a valve seat outlet (1267) communicating with the outlet (123),
when the valve needle assembly (30) is in the closed position, the valve needle assembly (30) blocks the valve seat outlet (1267) to cut off the communication between the inlet (122) and the outlet (123).
when the valve needle assembly (30) is in the open position, the valve needle assembly (30) is separated from the valve seat outlet (1267) , allowing the communication with the inlet (122) and the outlet (123) .

52. The expansion valve (100) according to claim 51, wherein the valve seat outlet (1267) comprises a first outlet segment (1269) and a second outlet segment (1270) that are in communication with each other, the first outlet segment (1269) is in communication with the interior of the valve cavity (121), the second outlet segment (1270) connects between the first outlet segment (1269) and the outlet (123), the cross-sectional area of the second outlet segment (1270) and the cross-sectional area of the outlet (123) gradually increase along the direction away from the outlet (123), and the cross-sectional area of the first outlet segment (1269) gradually increases along the direction away from the outlet (123).

53. The expansion valve (100) according to claim 52, wherein the first outlet segment (1269) is formed as a first rotational surface, the second outlet segment (1270) is formed as a second rotational surface, the outlet (123) is formed as a third rotational surface, the curvature of the third rotational surface is identical to that of the second rotational surface, and the third rotation curved surface is connected to the second rotational surface to form a rotational surface.
